# EUROPÄISCHE PATENTSCHRIFT

(11) **EP 1 567 013 B1**
(45) Veröffentlichungstag und Bekanntmachung des Hinweises auf die Patenterteilung: **18.04.2007**
(21) Anmeldenummer: 03775269.8
(22) Anmeldetag: 30.10.2003
(51) Int. Cl.: A01N 49/00, A01N 61/00

(54) **ACETALE ALS INSEKTENABWEHRMITTEL**
ACETALS AS INSECT REPELLANT AGENTS
ACETALS COMME AGENTS INSECTIFUGES

(30) Priorität: 31.10.2002 DE 10250898
(43) Veröffentlichungstag der Anmeldung: 31.08.2005
(73) Patentinhaber: Bencsits, Franz, 3400 Klosterneuburg (AT)
(72) Erfinder: Bencsits, Franz, 3400 Klosterneuburg (AT)
(74) Vertreter: Grünecker, Kinkeldey, Stockmair & Schwanhäusser Anwaltssozietät
(86) Internationale Anmeldenummer: PCT/EP2003/012105
(87) Internationale Veröffentlichungsnummer: WO 2004/039158

(56) Entgegenhaltungen:
- WO-A-00/19822
- WO-A-92/02136
- WO-A-97/34986
- GB-A- 2 140 421
- US-A- 4 832 059
- US-A- 6 087 402
- US-A1- 2002 068 075
- DATABASE WPI Section Ch, Week 199526 Derwent Publications Ltd., London, GB; Class C03, AN 1995-196675 XP002270072 & JP 07 112907 A (ST KAGAKU KK), 2. Mai 1995 (1995-05-02)
- DATABASE WPI Section Ch, Week 199824 Derwent Publications Ltd., London, GB; Class A92, AN 1998-266958 XP002270073 & JP 10 087407 A (ST KAGAKU KK), 7. April 1998 (1998-04-07)
- F.GUALTIERI ET AL.: "Topical Mosquito Repellents IV: Alicyclic, Bicyclic, and Unsaturated Acetals, Aminoacetals, Aminoacetals, and Carboxamide Acetals" JOURNAL OF PHARMACEUTICAL SCIENCES., Bd. 61, Nr. 1, Januar 1972 (1972-01), Seiten 577-580, XP002270068 AMERICAN PHARMACEUTICAL ASSOCIATION. WASHINGTON., US ISSN: 0022-3549
- DATABASE WPI Section Ch, Week 199011 Derwent Publications Ltd., London, GB; Class A97, AN 1990-079194 XP002270074 & JP 02 032035 A (NIPPON OILS & FATS CO LTD), 1. Februar 1990 (1990-02-01) -& JP 02 032035 A 1. Februar 1990 (1990-02-01)
- DATABASE CA [Online] CHEMICAL ABSTRACTS SERVICE, COLUMBUS, OHIO, US; retrieved from STN-INTERNATIONAL Database accession no. 135:166938 XP002270070 & BR 9 805 367 A (UNIVERSIDADE FEDERAL DE UBERLANDIA) 6. Juni 2000 (2000-06-06)
- W.G.TAYLOR ET AL.: "Diastereomers of the insect repellent 3-acetyl-2-(2',6'-dimethyl-5'-heptenyl)oxa zolidine." CANADIAN JOURNAL OF CHEMISTRY., Bd. 62, 1984, Seiten 96-100, XP002270069 NATIONAL RESEARCH COUNCIL. OTTAWA., CA ISSN: 0008-4042
- DATABASE CA [Online] CHEMICAL ABSTRACTS SERVICE, COLUMBUS, OHIO, US; Y.MATSUBARA ET AL.: "Synthesis of new acetals and their derivatives from terpene aldehyde and alcohol" retrieved from STN-INTERNATIONAL Database accession no. 73:109911 XP002270071 & YUKI GOSEI KAGAKU KYOKAISHA, Bd. 28, Nr. 8, 1970, Seiten 849-852,

## Beschreibung

Die vorliegende Erfindung betrifft ein Insektenabwehrmittel gegen fliegende, stechende, beissende und saugende Insekten, sowie Lästlinge der Gattung Acarina (Milben und Zecken).

### Beschreibung des Standes der Technik

Insektenabwehrmittel sind chemische Substanzen, die auf Insekten und Acarina abstossend oder abtötend wirken. Große praktische Bedeutung hat ihre Anwendung in der Human- und Veterinärhygiene, wo sie Mensch und Tier vor Befall mit blutsaugenden, stechenden, beißenden und damit nicht nur lästigen, sondem auch potentiell krankheitsübertragenden (Malaria, FSME, Lyme-Borreliose u.v.a.m.) Schädlingen schützen. Bei unmittelbar auf die Haut aufzutragenden Insektenabwehrmitteln ist es erforderlich, dass sie hautverträglich, ungiftig, schweiß- und lichtecht sind sowie in kosmetischer (äußerlich nicht hautbeeinträchtigend, Austrocknung, Faltenbildung) und pharmakologisch-gesundheitlicher (Irritationen, Penetration in tiefere Hautschichten und in den Blut- und Lymphkreislauf) Hinsicht einwandfrei sind. Außerdem soll der Schutz der behandelten Hautpartien, oder der Schutz von Mensch und Tier durch behandelte Umgebungsgegenstände möglichst lange Zeit anhalten und die Wirkungsbreite der Insektenabwehrmittel möglichst groß sein, d.h. sie sollen gegen möglichst viele, unterschiedliche Schädlinge und Lästlinge wirken.

In der Vergangenheit und in geringerem Maße bis heute wurden und werden etherische Öle, wie Citronell-und Lemongras-, sowie Nelken-, Lavendel- und Eukalyptusöl, sowie Campher als Repellentien eingesetzt, die aber allesamt gravierende Nachteile aufweisen, wie z.B.:
- bedenkliche Inhaltsstoffe, wie z. B. Eugenol in Nelkenöl, das im Tierexperiment als carzinogen, mutagen und hautreizend befunden wurde, oder Cineol im Öl aus Eucalyptus globulus, das auf der Haut im Stande ist, heftig juckende Exantheme hervorzurufen,
- nur kurzzeitige Wirksamkeit, da die etherischen Öle allesamt schnell durch die Körpertemperatur von der Hautoberfläche abdunsten und damit häufige Nachbehandlungen notwendig sind, um den Schutz zu gewährleisten,
- völlig fehlende Lichtechtheit und damit die permanente Gefahr von Phytosensibilisierung und Produktveränderungen bereits vor Anwendung.

In der jüngeren Vergangenheit wurden diese Verbindungen daher überwiegend durch sogenannte synthetische Repellentien ersetzt. Im Stand der Technik angewandte synthetische Repellentien sind z.B. Phtalsäuredimethylester, 1,2-Ethylhexan-1,3-diol, 3,4-dihydro-2,2-dimethyl-4-oxo-2H-pyran-6-carbonsäure-n-butylester, Bemsteinsäuredipropylester, N,N-Diethyl-3-methyl-benzamid (DEET - auch N,N-Diethyl-m-toluamid) und Pyridin-2,5-dicarbonsäure-di-n-proylester (Ullmanns Encyclopädie der techn. Chemie, 4. Auflage, Bd. 13, S. 237 ff., 1977). In letzter Zeit wird verstärkt Hydroxyethylbutylpiperidincarboxylat [1-Piperidinecarboxylic acid-2-(2-hydroxyethyl)-1-methylpropylester] eingesetzt.

Häufig sind diese synthetischen Repellentien jedoch nicht schweissbeständig, reizen die Schleimhäute und sind ebenso im Stande durch die oberste Hautschicht zu penetrieren und sich damit im Körper zu akkumulieren, wobei die daraus resultierenden Nebenwirkungen noch nicht vollständig erforscht sind, aber berechtigter Verdacht auf schädliche Auswirkungen nahegelegt ist.

WO 00/19822, JP-A-07-112 907, JP-A-10-087 407, US 6,087,402, JP-A-02-032035, WO 92/02136, GB 2,140,421, US 2002/068075 A1, WO 97/34986, US 4,832,059, BR 9,805,367 A, F. Gualtieri et al., J. Pharm. Sc. 61, Nr 1, 1972, 577-580, W.G. Taylor et al., Canad. J. Chem., 62, 1984, 96-100, und Y. Matsubare et al., Yuki Gosei Kagaku Kyokaisha, 28, Nr. 8, 1970, 849-852 offenbaren Insektenabwehrmittel Acetale sowie deren Verwendung.

### Aufgabe der vorliegenden Erfindung

Demgemäß liegt der vorliegenden Erfindung die Aufgabe zu Grunde, ein wirksames Insektenabwehrmittel für den Auftrag direkt auf die Haut, und/oder die Kleidung und/oder andere, den sich vor lästigen, schädlichen oder krankheitsübertragenden Stichen und Bissen von Insekten und Acariden (insbesondere Zecken) schützen wollenden Anwender umgebende Gegenstände und Materialien (Bettwäsche, Zeltplanen, Tischdecken etc.), auf Basis natürlicher und naturidentischer Rohstoffe mit geringstem toxikologischen Risiko zur Verfügung zu stellen, das außerdem über einen möglichst langen Zeitraum hinweg eine hohe Wirksamkeit entfaltet.

### Kurze Beschreibung der Erfindung

Diese Aufgabe wird erfindungsgemäß durch die Verwendung nach Anspruch 1 gelöst. Bevorzugte Ausgestaltungen sind in den Unteransprüchen angegeben. Das Grundgerüst der erfindungsgemäßen Substanzen ist ein acyclisches Terpen mit 10 Kohlenstoffatomen, d.h. ein Monoterpen, bevorzugt einfach oder zweifach ungesättigt. Die organischen Gruppen, die das Acetal bzw. Halbacetal bilden werden im folgenden Acetal- bzw. Halbacetalreste genannt.

Die folgende Beschreibung erläutert die vorliegende Erfindung weiter durch Verweis auf das erfindungsgemäße Insektenabwehrmittel. Diese Ausführungen gelten für die beanspruchte Verwendung.

Die Wirksamkeit der erfindungsgemäßen Verbindungen beruht auf deren Vermögen auf der Haut einen volldeckenden, langanhaltende Film zu bilden, der zuverlässig verhindert, dass die für die Ortung geeigneter Beuteobjekte (Menschen und Säugetiere) unerlässlichen Substanzen bzw. Signale (Schweiß, CO₂, Harn- und Buttersäure, Körperwärme) für die beißenden und stechenden, blutsaugenden Schädlinge von Haut und Fell abgegeben werden, sodass ein mit erfindungsgemäßen Verbindungen behandeltes warmblütiges Objekt von diesen nicht mehr identifiziert werden kann und daher unbelästigt bleibt. Bei Kontakt oder Direkteinwirkung wirkt das erfindungsgemäße Mittel abtötend in Folge der Eigenschaften des erfindungsgemäßes Insektenabwehrmittels, die Chitinschicht der Lästlinge zu verändern und Flüssigkeit aus deren Körpern zu verdrängen. Diese Direkteinwirkungen sind im Wesentlichen rein physikalischer Natur, sodass die Ausbildung von Resistenzen, wie sie bei chemisch, oder biochemisch wirksamen Substanzen, auf Grund des schnellen Generationenwechsels und damit der schnellen Weitergabe der entsprechenden Erbinformation an die Nachkommen, zwangsläufig erfolgen muss, bei den erfindungsgemäß eingesetzten Substanzen auszuschließen ist. Die erfindungsgemäße Verwendung der in der vorliegenden Anmeldung genannten Substanzen sichert eine gute Insekten abwehrende Wirkung. Der Einsatz kann dabei entweder direkt auf der Haut des zu schützenden Individuums erfolgen (Mensch oder Tier) oder aber auch durch Auftragung auf die Kleidung oder andere Artikel, wir Bettwäsche usw..

### Kurze Beschreibung der Figuren

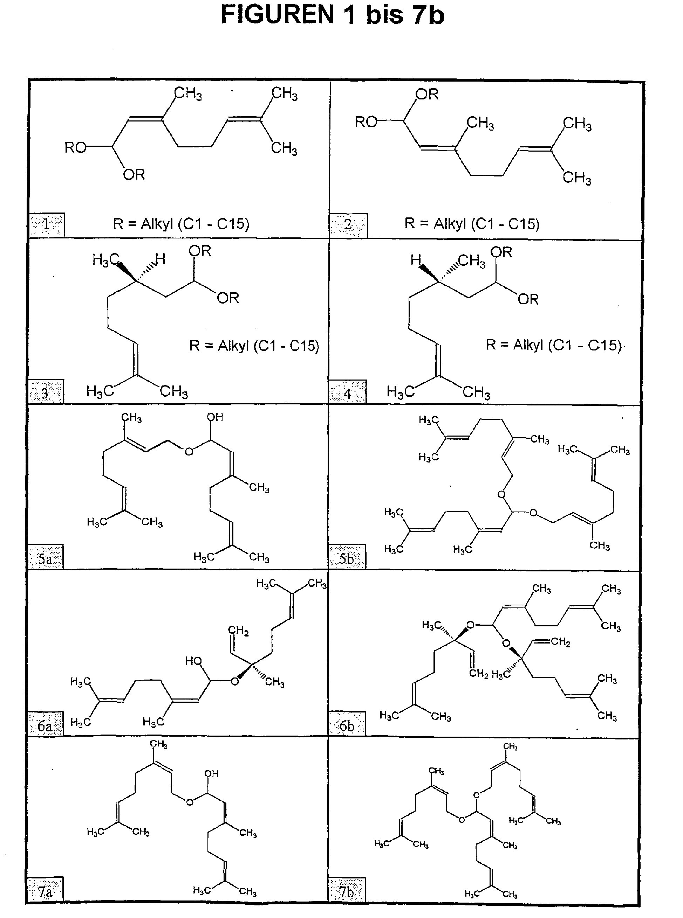

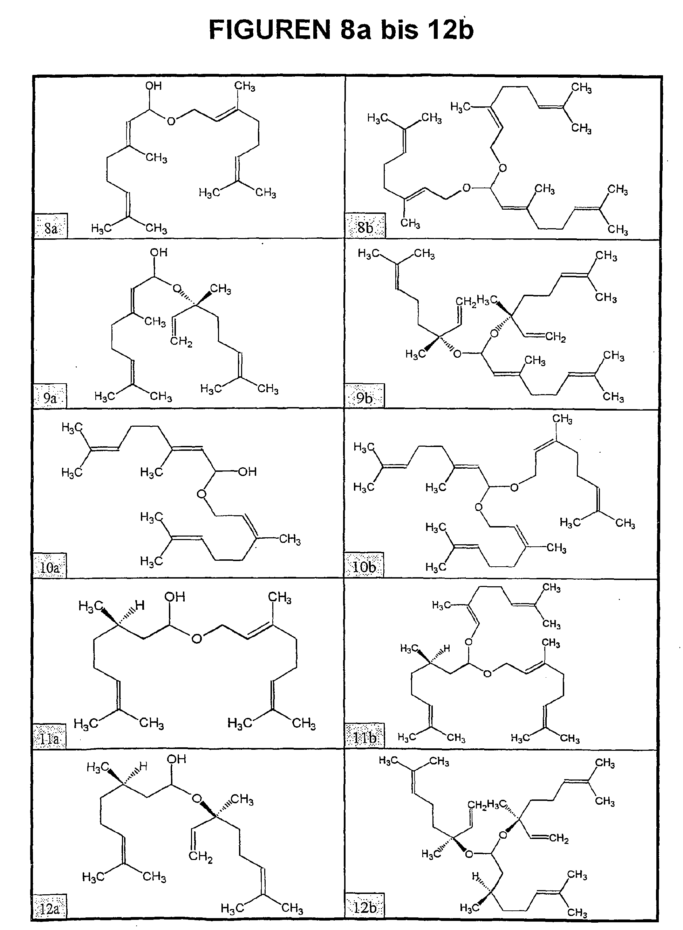

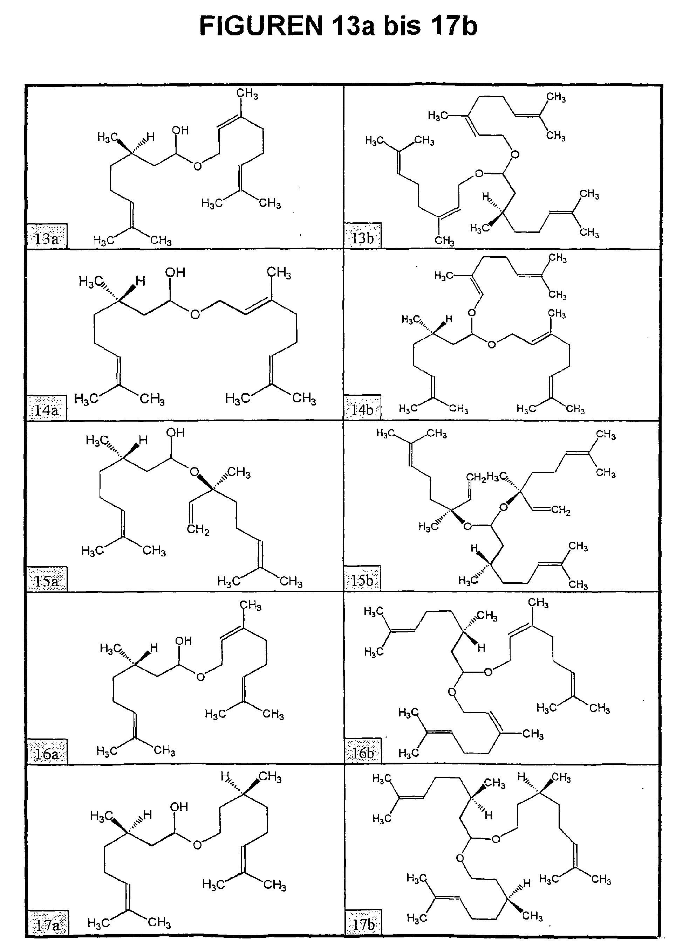

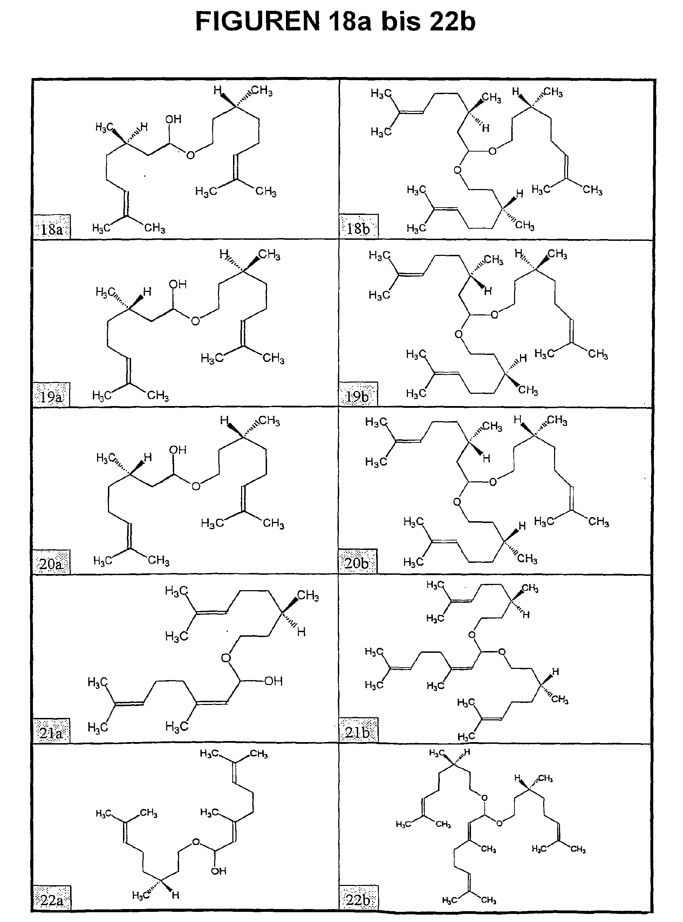

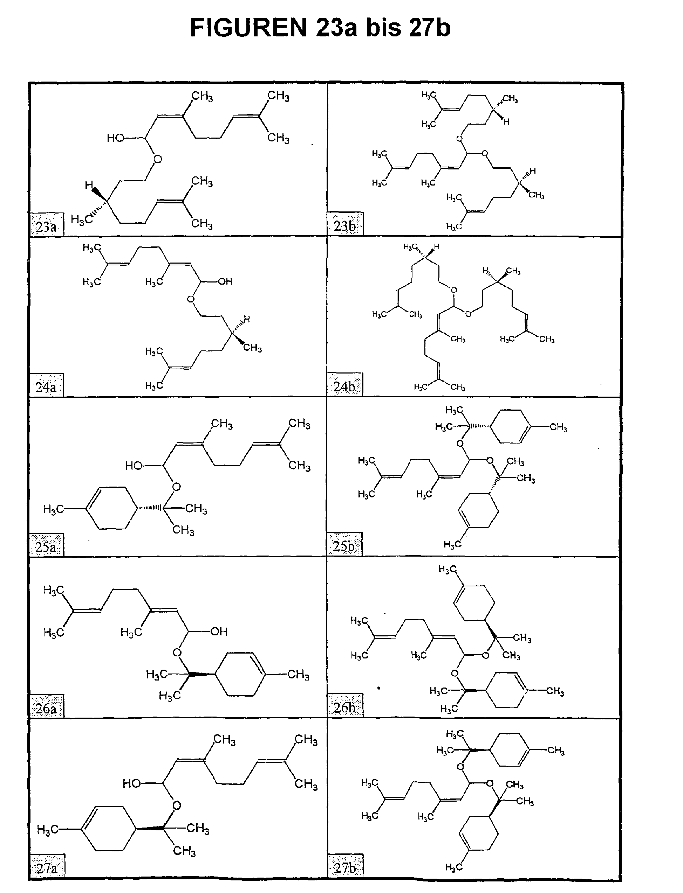

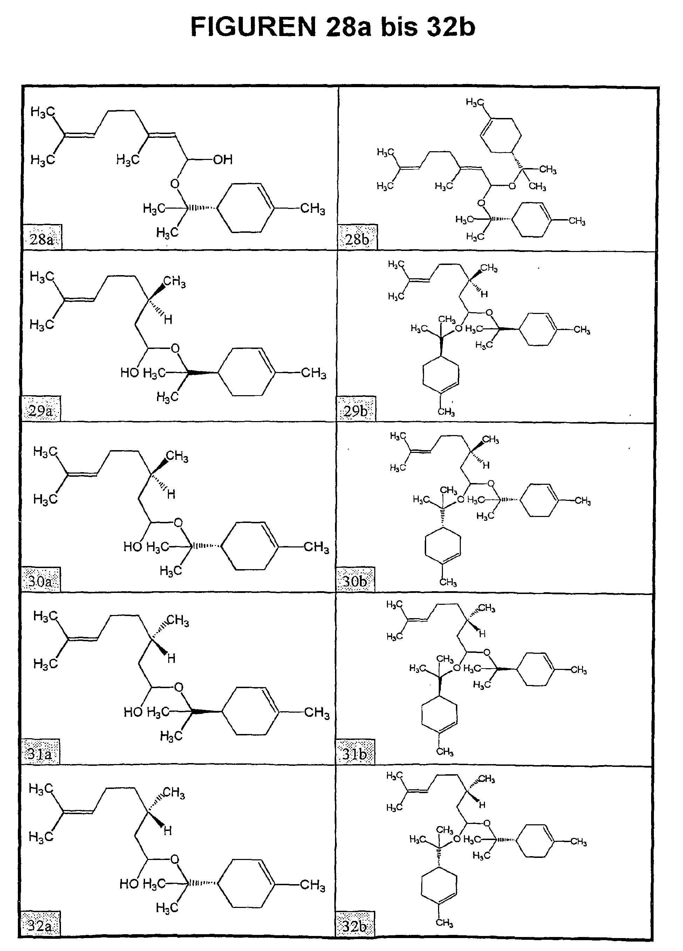

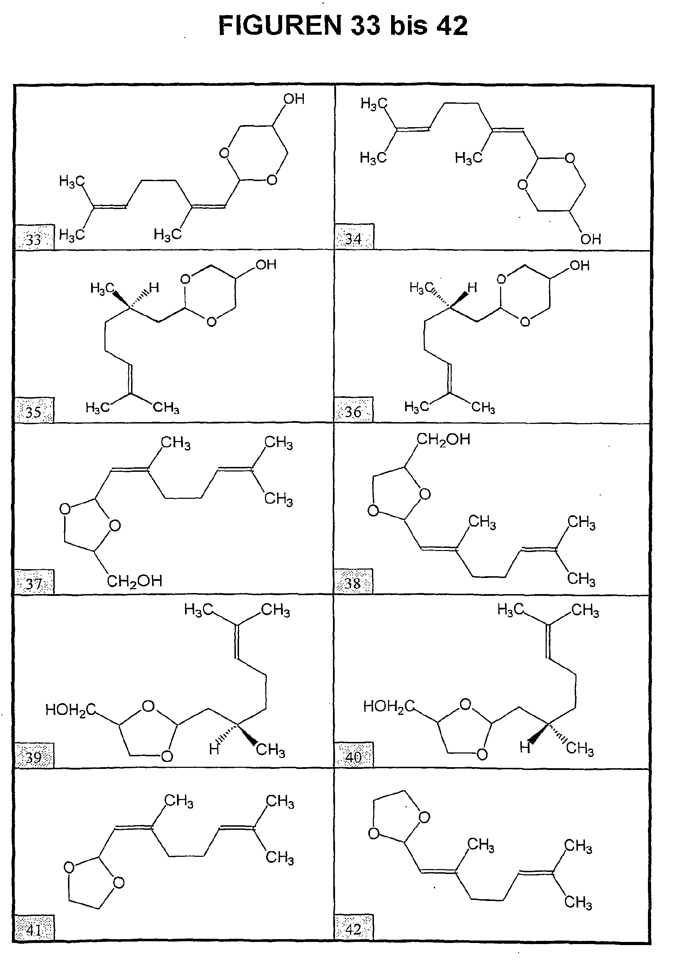

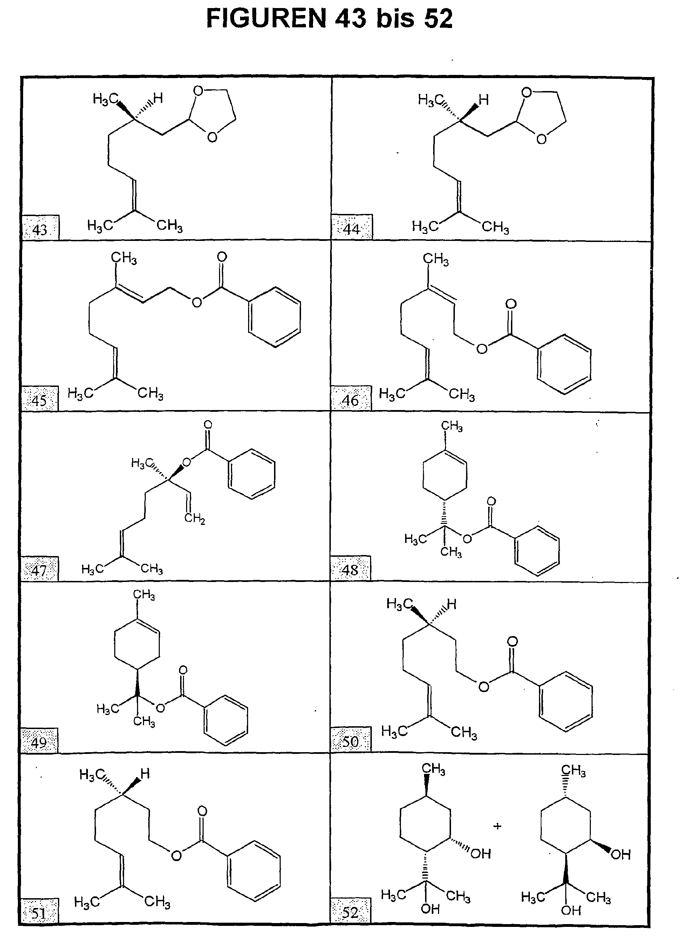

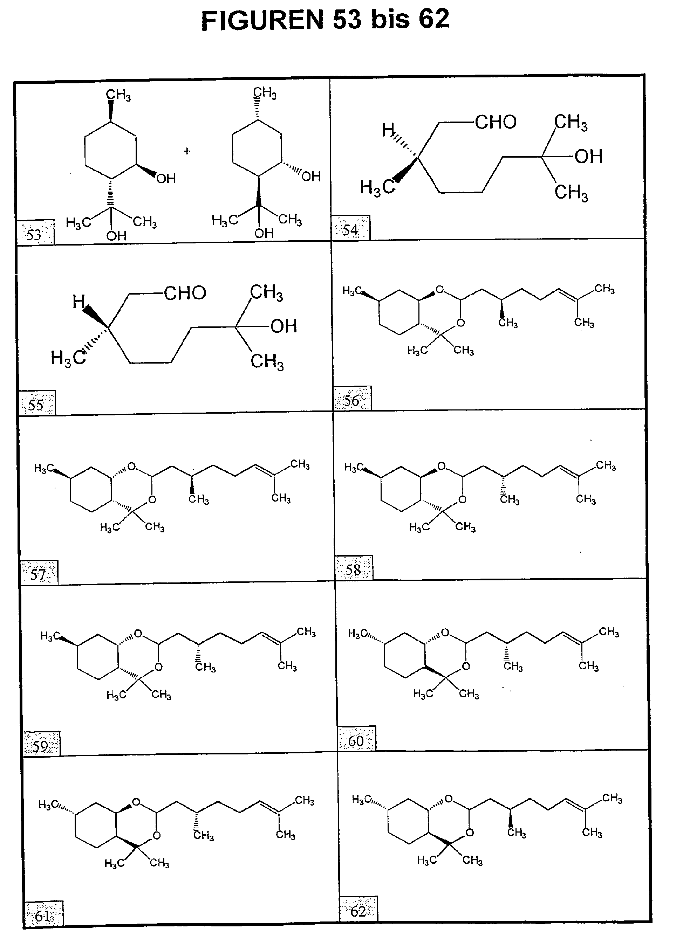

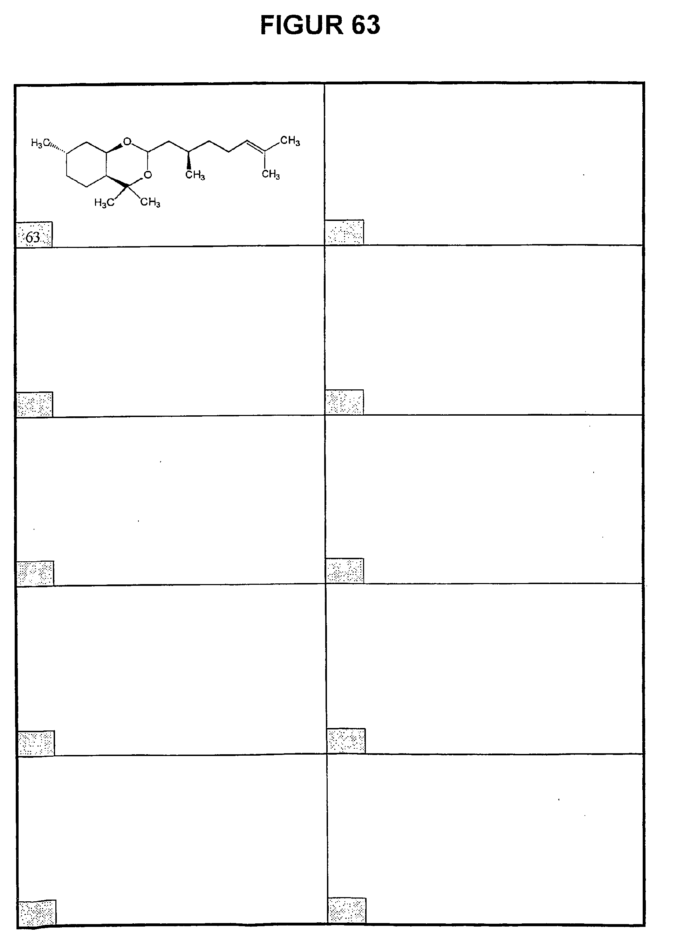

Die Figuren 1 bis 63 zeigen die chemische Konstitution einiger in der Beschreibung genannter Verbindungen.

### Detaillierte Beschreibung der Erfindung

Die erfindungsgemäß als Insektenabwehrmittel eingesetzten Substanzen. können direkt bezogen werden, wenn sie kommerziell erhältlich sind oder sie können aus den folgenden Verbindungen hergestellt werden, wobei die prinzipiellen Reaktionsschritte den Fachmann bekannt sind:

Bestandteile natürlicher etherischer Öle oder deren synthetisch hergestellten Substitute wie:
- Neral und Geranial [3,7-Dimethyl-2,6-octadienal],
- (+)-Citronellal, (-)-Citronellal [3,7-Dimethyl-6-octenal],
- Geraniol [(E)-3,7-Dimethyl-2,6-octadien-1-ol],
- Linalool [3,7-Dimethyl-6-octadien-3-ol],
- Nerol [(Z)-3,7-Dimethyl-2,6-octadien-1-ol],
- (+)-Citronellol, (-)-Citronellol [3,7-Dimethyl-6-octen-1-ol] die untereinander nach nachstehend beschriebenen Verfahren zu den jeweiligen Acetalen umgesetzt werden.

Als Katalysatoren werden organische oder anorganische Säuren eingesetzt.

In Übereinstimmung mit der erfindungsgemäßen Verwendung können weitere Substanzen eingesetzt werden, wie: gesättigte oder ungesättigte, aliphatische Carbonsäuren mit 1 bis 12 Kohlenstoffatomen, bevorzugt Octansäure oder Decansäure, Benzoesäureester, p-Mentha-3,8-diole, Hydroxyoctanale, p-Mentha-3,8-diylacetale

Bevorzugte Zusammensetztungen enthalten:
0,02 bis 95.00 Gew.% einer oder mehrerer der erfindungsgemäßen Substanzen der Strukturen 5a bis 24b (im folgenden (I)),
0,00 bis 95,00 Gew.% eines natürlichen oder synthetischen fetten Öles, in dem die erfindungsgemäßen Substanzen löslich sind, bevorzugt Kokosöl (im folgenden (II)),
0,02 bis 50,00 Gew.% eine oder mehrere gesättigte oder ungesättigte, aliphatische Carbonsäuren mit 1 bis 12 Kohlenstoffatomen,bevorzugt Octansäure oder Decansäure (im folgenden (III)),
0,02 bis 50,00 Gew.% eines oder mehrerer Benzoesäureester bevorzugt mit der Struktur 45 bis 51 (im folgenden (IV)),
0,00 bis 50,00 Gew.% p-Mentha-3,8-diol, bevorzugt mit der Struktur 52 oder 53 (im folgenden (V)),
0,00 bis 50,00 Gew.% ein Hydroxyoctanal, bevorzugt mit der Struktur 54 oder 55 (im folgenden (VI),
0,00 bis 20,00 Gew.% ein oder mehrere Diylacetale, bevorzugt mit den Strukturen 56 bis 59 (im folgenden (VII)),
0,00 bis 50,00 Gew.% eines oder mehrerer Emulgatoren, bevorzugt Lecithin, PEG-Derivate des Castor-Öls und/oder Decylglucosid (im folgenden (VIII)),
0,00 bis 99,88 Gew.% Wasser (im folgenden (IX)).

Stärker bevorzugt enthält eine erfindungsgemäße Zusammensetzung:
0,02 bis 30,00 Gew.% I
0,05 bis 30,00 Gew.% III
0.08 bis 30,00 Gew.% IV
5,00 bis 30,00 Gew.% V
0,05 bis 10,00 Gew.% VII
0,05 bis 10,00 Gew.% VIII
5,00 bis 99,88 Gew.% IX

Besonders bevorzugt enthält eine erfindungsgemäße Zusammensetzung:
0,02 bis 16,00 Gew.% I
0,05 bis 20,00 Gew.% III
0,08 bis 10,00 Gew.% IV
0,05 bis 10,00 Gew.% VIII
44,00 bis 99,88 Gew.% IX

Die erfindungsgemäßen Insektenabwehrmittel können in nachstehenden Arten von Fertigprodukten eingearbeitet sein, um dem Verbraucher Wahlmöglichkeiten in der Form der Anwendungsprodukte zu lassen:
**Emulsion, Dispersion, Lotion, Creme, Gel oder Lösung.**

Zur Herstellung dieser Verwendungsformen können alle allgemein üblichen Präparationsverfahren zum Einsatz kommen.

Ebenso können dabei die üblichen Grundstoffe und Additive eingesetzt werden. Sie umfassen die üblicherweise für chemisch-technische, kosmetische und pharmazeutische Zubereitungen verwendeten Lösungsmittel, Lösungsbeschleuniger, Lösungsvermittler, Emulgatoren, Netzmittel, Antischaummittel, Salzbildner, Puffer, Gelbildner, Filmbildner, Verdickungsmittel, Bindemittel, Gleitmittel, Fettungsmittel, Spreitmittel, Antiklebmittel, Fließregulierungsmittel, Feuchthalte- und Trockenmittel, saure und alkalische pH-Regulatoren, wie organische Säuren und Fruchtsäuren oder Hydroxide von Erdalkalimetallen, Amine uns Amide, Füll- und Hilfsstoffe, wie Antioxidantien, Konservierungsmittel, Geruchskorrigentien und Färbemittel.

Der Begriff "Emulsion" umfasst alle dispersen Systeme aus zwei oder mehreren, nicht miteinander mischbaren Flüssigkeiten, wobei die Emulsionspartner bei Raumtemperatur auch als feste Stoffe oder amorphe und kristalline Wachse vorliegen können. Diese Emulsionen können Makro- oder Mikroemulsionen sein. Typischerweise werden Wasserin-Öl und/oder Öl-in-Wasser Emulsionen verwendet. Zur Verringerung der Grenzflächenarbeit (aufzuwendende Arbeit zum Emulgieren) werden Emulgatoren verwendet. Emulgatoren sind üblicherweise oberflächenaktive Stoffe, typischerweise mit hydrophilen Endgruppen. Typische Beispiele davon umfassen:
- anionische Emulgatoren, d.s. Emulgatoren mit Carboxylat-,Sulfonat-, Sulfat- Phosphat-, Polyphosphat-, Lactat-. Citrat-, Tartrat-, Glucose- oder Polyglucoseendgruppen
- kationische Emulgatoren, d.s. Emulgatoren mit Aminsalz- oder quartären Ammoniumendgruppen
- amphothere und zwitterionische Emulgatoren, d.s. Emulgatoren mit zwitterionischen oder Betainendgruppen, sowie
- nichtionische Emulgatoren, d.s. Emulgatoren mit Alkohol-, Polyether-, Glycerin-, Sorbit-, Pentaerythrit-, Saccharose-, Essigsäure und/oder Milchsäureresten in der Endgruppe.

Alle Emulgatoren beinhalten zudem lipophile Endgruppen, wie Alkyl- oder Alkenylreste, jeweils geradkettig, verzweigt oder cyclisch, sowie Aryl- und Alkarylreste.
Weiterhin können hydrophile Seitengruppen wie Hydroxyl-, Ester-, Sulfamid-, Amid-, Amin- Polyamid-Polyamin-, Ether-, Polyether-, Glycerin-, Sorbit-, Pentaerythrit- oder Saccharosegruppen enthalten sein.

Der Begriff "Gele" umfasst formbeständige, leicht deformierbare, an Flüssigkeiten reiche Systeme aus mindestens zwei Komponenten. Üblicherweise sind diese beiden Komponenten: a) eine Flüssigkeit und b) ein fester, kolloidal verteilter Stoff, wie Gelatine, Kieselsäure, Montmorillonit, Bentonit, Polysaccharide, Polyacrylate, Pektine uvam.

Die Verfahren zur Herstellung aller erfindungsgemäßen Insektenabwehrmittel können in jeder zur Herstellung von Chemikalien eingerichteten Produktionsstätte ohne besonderen technischen Aufwand durchgeführt werden.

### Als typische Verfahren sind folgende Beispiele angeführt:

In einem geeigneten, dicht verschließbaren Edelstahlkessel der Mindestqualität V4A, mit Permanentrührwerk und Heizung werden die Bestandteile in wässriger Lösung über 2 bis 15 Stunden bei 50 bis 150°C unter Rühren gehalten.

Die reinen Acetale sind Pulver, bzw. kristalline, aber fettdispergierbare Substanzen, so dass eine Anwendung in reiner Form als Insektenschutzmittel für die Haut schwierig ist. Als gutes Dispergiermittel hat sich Kokosöl gezeigt. Zur Herstellung wässriger Lösungen ist der Zusatz des Lebensmittelemulgators Lecithin verwendbar.

Die folgenden Zusammensetzungen wurden durch geeignetes Vermischen der genannten Verbindungen hergestellt:
IAM 6 = 50,00 Gew.% Struktur 5a, + 15,00 Gew-.% Kokosöl + 10,00 Gew-.% Lecithin +25,00 Gew-% Wasser
IAM 7 = 50,00 Gew.% Struktur 5b, detto
IAM 8 = 50,00 Gew.% Struktur 6a, detto
IAM 9 = 50,00 Gew.% Struktur 6b, detto
IAM 10 = 50,00 Gew.% Struktur 7a, detto
IAM 11 = 50,00 Gew. % Struktur 7b, detto
IAM 12 = 50,00 Gew.% Struktur 8a, detto
IAM 13 = 50,00 Gew.% Struktur 8b, detto
IAM 14 = 50,00 Gew.% Struktur 9a, detto
IAM 15 = 50,00 Gew.% Struktur 9b, detto
IAM 16 = 50,00 Gew.% Struktur 10a, detto
IAM 17 = 50,00 Gew.% Struktur 10b, detto
IAM 18 = 50,00 Gew.% Struktur 11a, detto
IAM 19 = 50,00 Gew.% Struktur 11 b, detto
IAM 20 = 50,00 Gew.% Struktur 12a, detto
IAM 21 = 50,00 Gew.% Struktur 13a, detto
IAM 22 = 50,00 Gew.% Struktur 14a, detto
IAM 23 = 50,00 Gew.% Struktur 14b, detto
IAM 24 = 50,00 Gew.% Struktur 15a, detto
IAM 25 = 50,00 Gew.% Struktur 15b, detto
IAM 38 = **25,00 Gew.% Struktur 16a + 25,00 Gew.% Struktur 20b + 15,00 Gew.% Kokosöl + 10,00 Gew.% Lecithin + 25,00 Gew.% Wasser**
IAM 39 = 25,00 Gew.% Struktur 16b + 25,00 Gew.% Struktur 20a, detto
IAM 40 = 25,00 Gew.% Struktur 22a + 25,00 Gew.% Struktur 28a, detto
IAM 41 = 25,00 Gew.% Struktur 22b + 25,00 Gew.% Struktur 28b, detto

Da sich Acetale in Estern lösen, konnte auf den Zusatz von Kokosöl verzichtet werden.
IAM 44 =40,00 Gew.% Struktur 8a + 10,00 Gew.% Struktur 46, + 10,00 Gew.% Lecithin + 40,00 Gew.% Wasser
IAM 45 = 40,00 Gew.% Struktur 14b + 10,00 Gew% Struktur 47, detto
IAM 46 = 40,00 Gew.% Struktur 16a + 10,00 Gew.% Struktur 48, detto
IAM 47 = 40,00 Gew.% Struktur 17b + 10,00 Gew.% Struktur 50, detto
IAM 49 = 30,00 Gew.% Struktur 8a + 10,00 Gew.% Struktur 46, + 10,00 Gew % Octansäure + 10,00 Gew % Lecithin + 40,00 Gew % Wasser
IAM 50 = 30,00 Gew.% Struktur 14b + 10,00 Gew.% Struktur 47, detto
IAM 52 = 30,00 Gew.% Struktur 5a + 10,00 Gew.% Struktur 49, detto
IAM 55 = 20,00 Gew.% Struktur 8a + 10,00 Gew.% Struktur 46, + 10,00 Gew % Struktur 52 + 10,00 Gew % Octansäure + 10,00 Gew % Lecithin + 40,00 Gew % Wasser
IAM 56 = 20,00 Gew.% Struktur 14b + 10,00 Gew.% Struktur 47, detto
IAM 58 = 20,00 Gew.% Struktur 5a + 10,00 Gew.% Struktur 51, detto
IAM 60 = 20,00 Gew.% Struktur 8a + 10,00 Gew.% Struktur 46 + 10,00 Gew % Struktur 53 + 10,00 Gew % Octansäure + 10,00 Gew % Lecithin + 40,00 Gew % Wasser
IAM 61 = 20,00 Gew.% Struktur 14b + 10,00 Gew.% Struktur 47, detto
IAM 63 = 20,00 Gew.% Struktur 5a + 10,00 Gew.% Struktur 51, detto
IAM 65 = 20,00 Gew.% Struktur 8a + 10,00 Gew.% Struktur 46, + 5,00 Gew % Struktur 52 + 5,00 Gew % Struktur 53 + 10,00 Gew % Octansäure + 10,00 Gew % Lecithin + 40 Gew % Wasser
IAM 66 = 20,00 Gew.% Struktur 14b + 10,00 Gew.% Struktur 47, detto
IAM 68 = 20,00 Gew.% Struktur 5a + 10,00 Gew.% Struktur 51, detto
IAM 70 = 20,00 Gew.% Struktur 8a + 10,00 Gew.% Struktur 46, + 5,00 Gew % Struktur 52 + 5,00 Gew % Struktur 53 + 4,00 Gew % Struktur 56 + 10,00 Gew % Octansäure + 10,00 Gew % Lecithin + 40,00 Gew % Wasser
IAM 71 = 20,00 Gew. % Struktur 14b + 10,00 Gew.% Struktur 47, detto
IAM 73 = 20,00 Gew.% Struktur 5a + 10,00 Gew.% Struktur 51, detto
IAM 75 = 20,00 Gew.% Struktur 8a + 10,00 Gew.% Struktur 46, + 5,00 Gew.% Struktur 52 + 5,00 Gew.% Struktur 53 + 4,00 Gew.% Struktur 56 + 10,00 Gew.% Octansaüre + 10,00 Gew.% Lecithin + 40,00 Gew.% Wasser
IAM 76 = 20,00 Gew.% Struktur 14b + 10,00 Gew.% Struktur 47, detto
IAM 78 = 20,00 Gew.% Struktur 5a + 10,00 Gew.% Struktur 51, detto
IAM 80 = 20,00 Gew.% Struktur 8a + 10,00 Gew.% Struktur 46, + 5,00 Gew.% Struktur 52 + 5,00 Gew.% Struktur 53 + 2,00 Gew.% Struktur 58 + 2,00 Gew.% Struktur 59 + 10,00 Gew.% Octansäure + 10,00 Gew.% Lecithin + 40,00 Gew.% Wasser
IAM 81 = 20,00 Gew.% Struktur 14b + 10,00 Gew.% Struktur 47, detto
IAM 83 = 20,00 Gew.% Struktur 5a + 10,00 Gew.% Struktur 51, detto
IAM 85 = 5,00 Gew.% Struktur 8b + 5,00 Gew.% Struktur 48 + 5,00 Gew.% Struktur 54 + 3,00 Gew.% Struktur 56 + 2,00 Gew.% Struktur 57 + 1,00 Gew.% Struktur 59 + 5,00 Gew.% Octansäure + 5,00 Gew.% Kokosöl +3,00 Gew.% PEG-40 Hydrogenated Castor Oil + 66,00 Gew.% Wasser
IAM 88 = 0,20 Gew.% Struktur 8a + 0,80 Gew.% Struktur 45 + 0,67 Gew.% Decyl Glucoside + 98,33 Gew.% Wasser
IAM 89 = 0,20 Gew.% Struktur 5a + 0,80 Gew.% Struktur 45, detto

### Beispiele

Die Zusammensetzungen wurden im Hinblick auf ihre Wirksamkeit wie folgt getestet.

### 1. Testserie Repellenz gegen Stechmücken am Menschen

Die Schädlingsabwehrmittel nach Beispiel IAM 6 bis IAM 85 wurden jeweils an verschiedenen Personen aller Alterstufen getestet, wobei als Referenz ein, als äußerst wirksam anerkanntes Produkt des Marktes diente (KIK AKTIV ® - mit 30% DEET als Wirkstoff).

Der rechte Unterarm der jeweiligen Versuchsperson wurde auf einer Fläche von ca. 250 cm³ mit dem entsprechenden Testprodukt IAM 6 bis IAM 85 behandelt. Eine Menge von 2 ml der entsprechenden Testsubstanz wurde auf der Testfläche gleichmäßig verteilt. Die behandelte Unterarmfläche wurde, sowohl zum Oberarm als auch zur Handwurzel hin, mit einem mückenstichdichten Klebeband über einem kurzen Kunststoffschlauch abgedichtet. Die unbehandelte Hand wurde mit einem dicken Handschuh überzogen und diente so gleichzeitig als Kontrolle für die Stechaktivität der Mücken, da diese bei Stechlust auf diesem absitzen und versuchen durch das Gewebe hindurch in die darunter liegende Haut zu stechen. Der linke Unterarm wurde ebenso mit Referenzprodukt (REF) behandelt. Als Versuchstiere wurden je Einzelversuch (IAM rechts gegen REF links) etwa 300 bis 400 weibliche Gelbfiebermücken in einem Zuchtkäfig von 40x40x40 cm eingesetzt. Dies ist eine Populationsdichte, wie sie in der freien Natur kaum jemals vorkommt und ermöglicht somit eine gute Differenzierung der Wirksamkeit der einzelnen Substanzen.

Für den Test wurde die Hand und der präparierte Unterarm, nach 1-stündiger Wartezeit, erst der linke mit REF und dann der rechte mit IAM stündlich für jeweils 10 Minuten in den Käfig gehalten und während dieser Zeit die Zahl der Stechmücken notiert, die
(a) durch den Handschuh zu stechen versuchten (positive Kontrolle),
(b) die behandelte Fläche näher als 3 cm anflogen, aber wieder abdrehten (Fernhaltewirkung)
(c) auf der behandelten Fläche länger als 2 Sekunden sitzen blieben, aber nicht stachen und
(d) in die behandelte Haut einstachen und Blut saugten.

Jede Testperson führte nur einen Versuch an einem Tag durch, um die Gefahr von Produktkumulierungen und eventuellen Kreuzreaktionen der Produkte auf ungenügend gereinigter Haut zu vermeiden.

### Versuchsergebnisse:

### Legende:

- 1 =: Zeit nach der Applikation des jeweiligen Testproduktes in Stunden
- 2 =: Expositionsdauer innerhalb der 10-minütigen Testdauer je Stunde; bei Stichen Abbruch und Angabe der Minuten der dadurch verkürzten Expositionsdauer
- a =: absitzende Mücken auf dem Handschuh
- b =: anfliegende Mücken, die die behandelte Fläche näher als 3 cm anflogen und wieder abdrehten, ohne abzusitzen und kürzer als 2 Sekunden auf der Testfläche absitzende Mücken
- c =: auf der behandelten Fläche länger als 2 Sekunden absitzende Mücken, die aber nicht stachen und somit, zusammen mit den Mücken des Kriteriums b den Belästigungsfaktor darstellen
- d =: Anzahl der stechenden Mücken vor Abbruch des Versuches

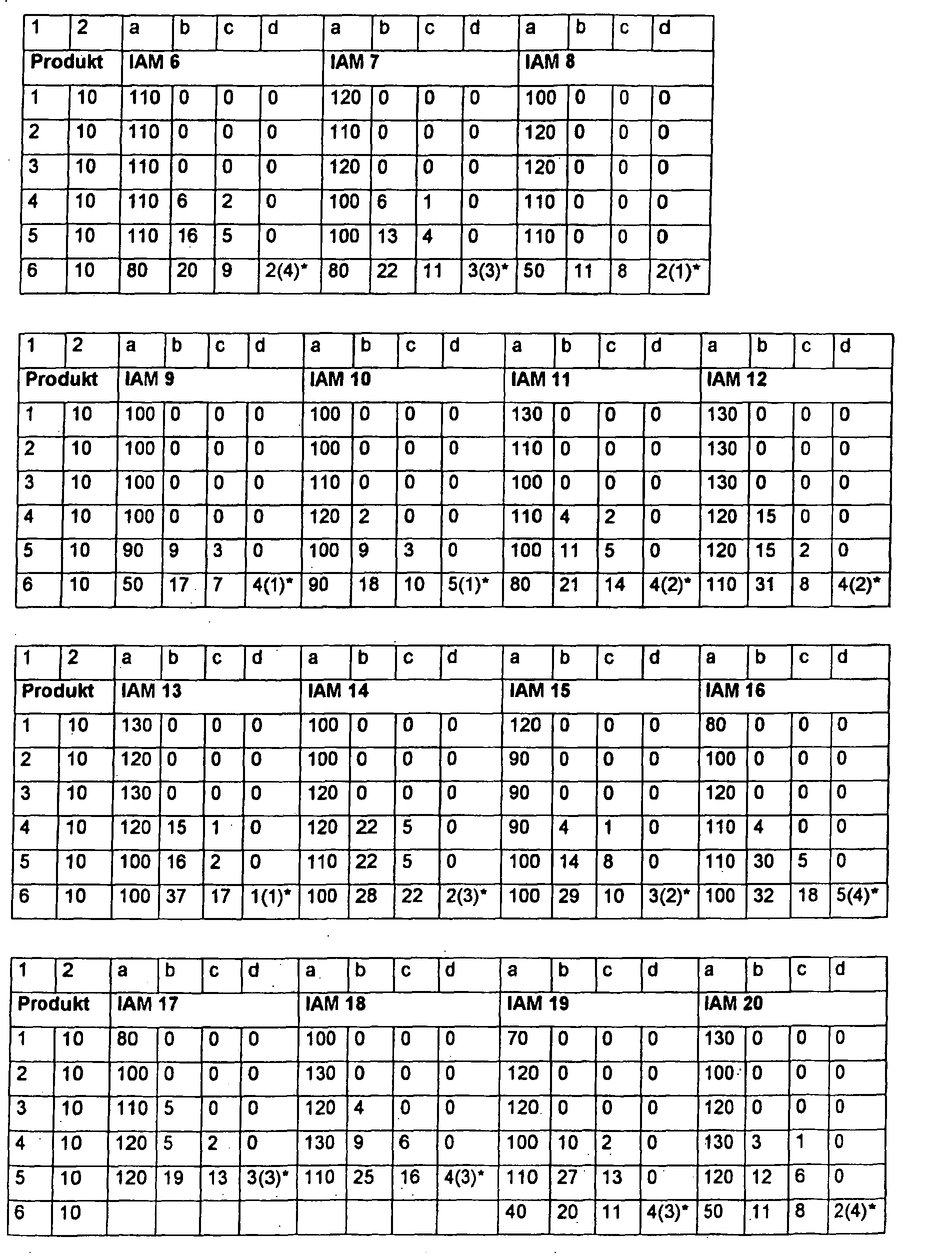

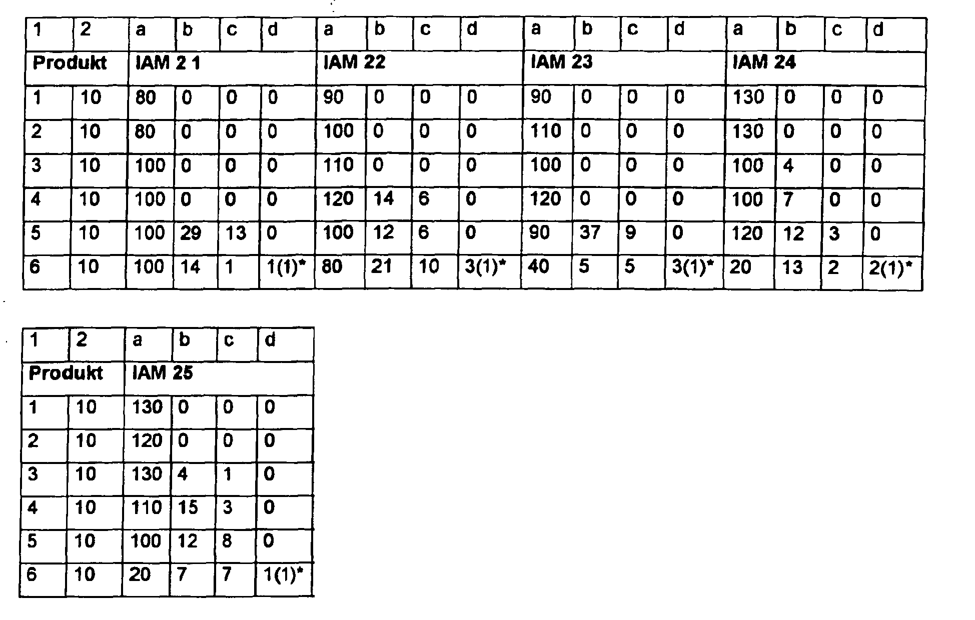

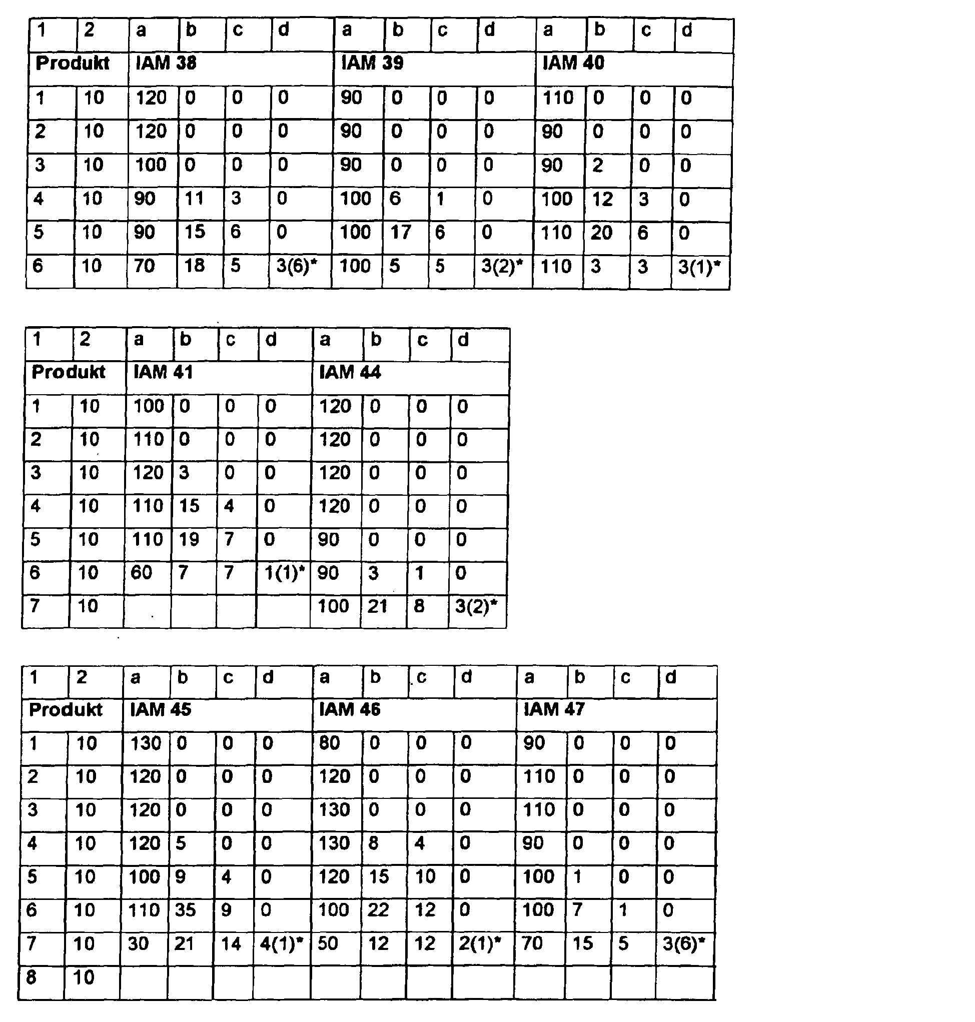

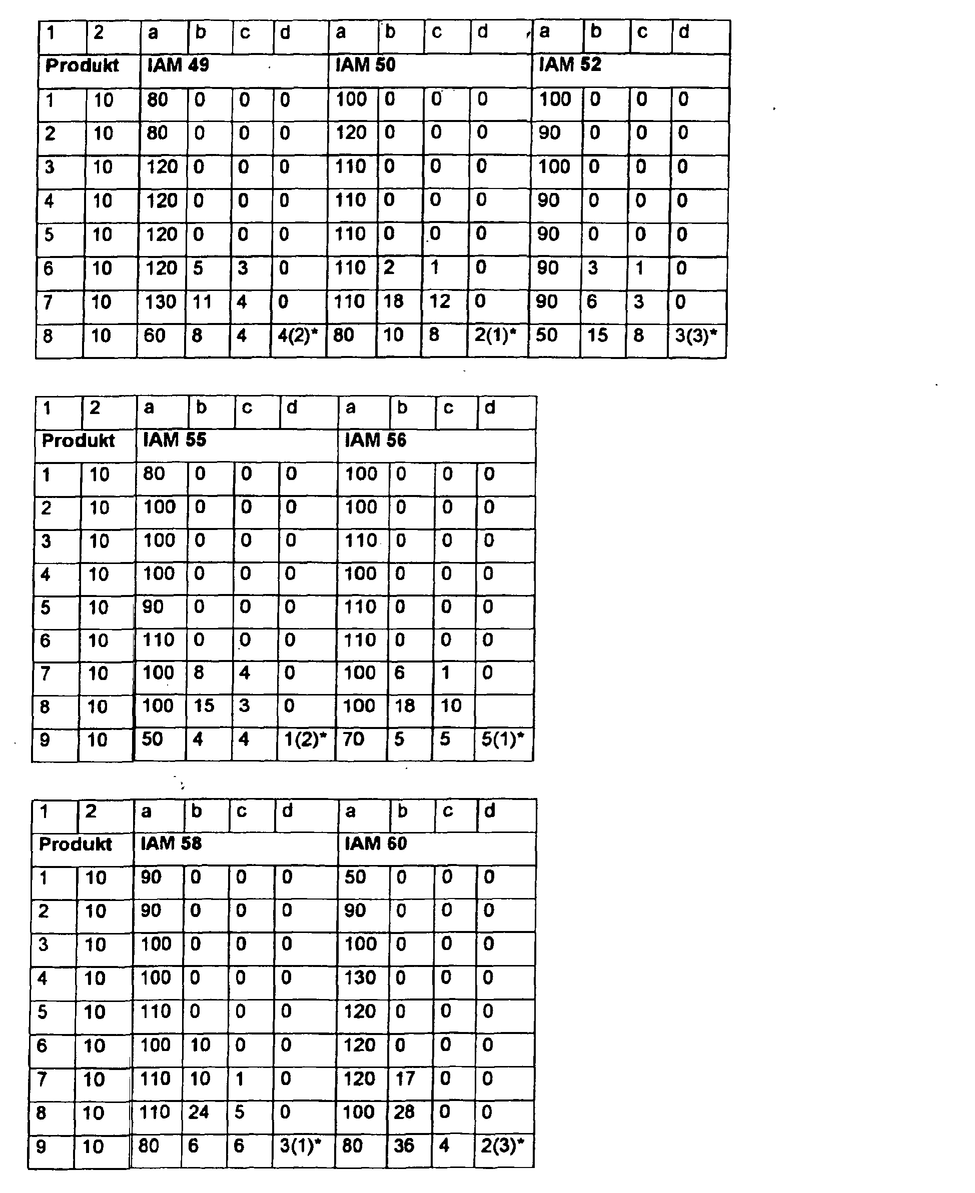

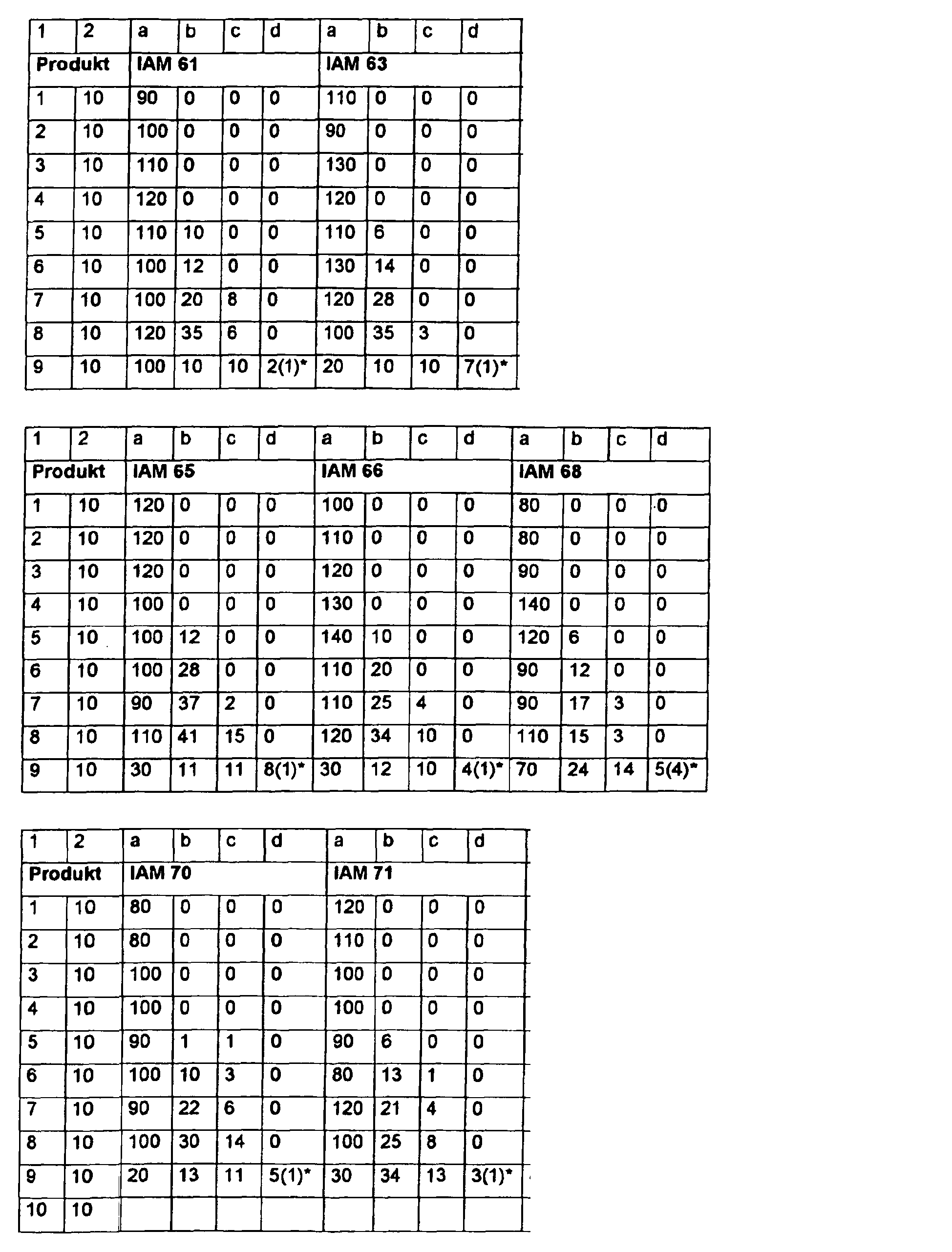

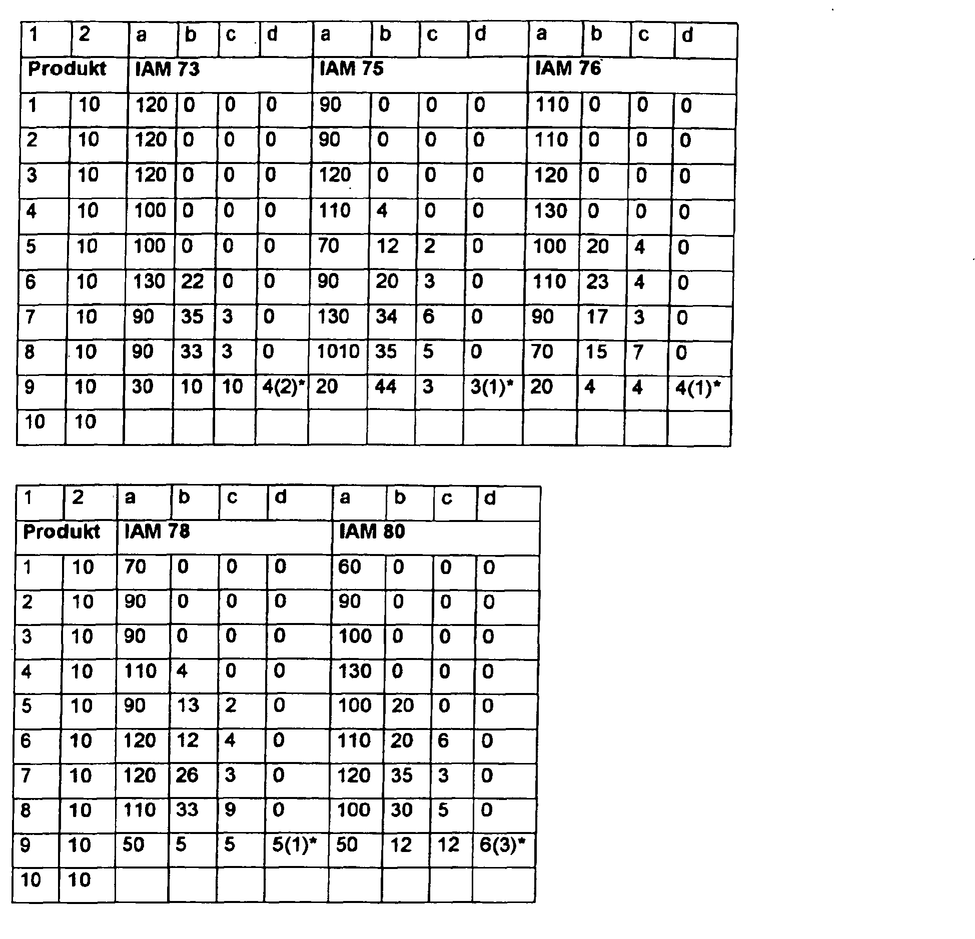

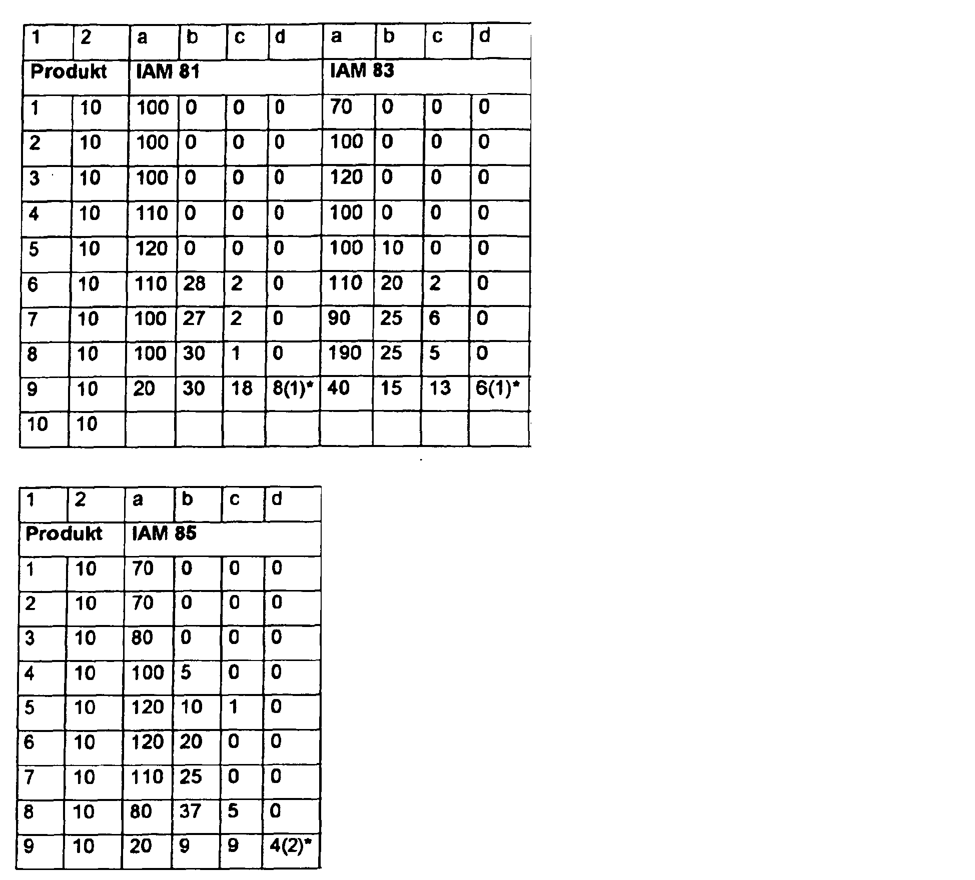

### 2. Testserie Repellenz gegen Zecken am Meerschweinchen

Insgesamt zwölf adulten weiblichen Meerschweinchen wurden die rechten Flanken im Ausmaß ca. 4x4 cm rasiert und die Haut und die umgebenden behaarten Stellen per Hand mit je ca. 2 ml des jeweiligen Testproduktes vollflächig deckend behandelt. Danach wurde jede Stunde jedem Meerschweinchen je 1 laborgezogene, adulte, zwei Wochen lang ausgehungerte Zecke der Gattung Gemeiner Holzbock (Ixodes ricinus) mittels Pinzette in die Mitte der behandelten , rasierten Fläche aufgesetzt und deren Verhalten beobachtet. Die Meerschweinchen waren dazu nicht wie üblich sediert, um eine möglichst naturgetreue Situation zu simulieren, sondem wurden mit Salat gefüttert und blieben ziemlich ruhig, da sie an menschliche Umgebung gewöhnt sind.

Auffallend war sofort, dass die Zecken nicht, wie auf dem unbehandelten Meerschweinchen, das als Kontrolltier (KT) diente, wandernd begannen, eine für einen Einstich günstige Stelle zu suchen (normalerweise eine Beugefalte unter den Hinterbeinen), sondem sich über einige Minuten auf der behandelten Fläche in einem engen Kreis bewegten und dann, bei der geringsten Bewegung ihrer Wirte auf den Boden des Käfigs abfielen, obwohl Zecken normalerweise mit ihren Haltekrallen selbst auf glatten Flächen Halt zu finden vermögen. Die abgefallenen Zecken wurden sofort in beschriftete Gläser verbracht und über 72 Stunden beobachtet. Nach diesem Zeitraum waren alle beobachteten Zecken tot.

**Probandenliste und Versuchsprodukte:**
- die unbehandelte Kontrolle wurde mit KT,
- das mit Referenzprodukt ANTI BRUMM behandelte Versuchstier mit REF und
- die mit der erfindungsgemäßen Zusammensetzung behandelten Versuchstiere mit IAM 38, gekennzeichnet.

### Ergebnisse der Wirksamkeit:

**KT**: jede der einzeln innerhalb der Testzeit über 8 Stunden stündlich angesetzten Zecken begann, nach kurzer Orientierungsphase, alsbald einzubohren und Blut zu saugen, worauf sie sofort abgenommen wurden, um das Kontrolltier nicht zu schwächen.

**REF:** die Zecken der ersten 2 Stunden fielen wie bei den Produkten der IAM-Serie ab und waren innerhalb von 72 Stunden tot. Die Zecke der 3. Stunde begann sich einzubohren, worauf der Versuch abgebrochen wurde und die Schutzzeit damit 2 Stunden betrug.

**Schutzzeiten der erfindungsgemäßen Zusammensetzungen gegen Zecken am Meerschweinchen:**
X = Schutzzeit
Y = Zeitpunkt des erstmaligen Einbohrens einer frisch angesetzten Zecke

| Produkt | IAM 38 |
|---|---|
| 1 Std. | |
| 2 Std. | |
| 3 Std. | |
| 4 Std. | x |
| 5 Std. | y |
| 6 Std. | |
| 7 Std. | |
| 8 Std. | |

Alle ohne Einbohrversuche abgefallenen Zecken waren innerhalb der Beobachtungszeit von 72 Stunden tot.

### 6. Weitere Anwendungen auf Insekten:

IAM 88 wurde mengengleich zu REF (I) und REF (II) im Laborversuch als Sprühmittel zur Bekämpfung folgender Schädlinge (Adulte und Metamorphosen) vergleichend eingesetzt.
A) Musca domestica - Gemeine Stubenfliege
B) Blatella germanica - Deutsche Küchenschabe
C) Lasius niger - Schwarze Gartenameise
D) Ixodes rizinus - Holzbock (Zecke)
E) Tineola bisseiliella - Kleidermotte

Für die Versuche wurden von den fliegenden Schädlingen A) und E) jeweils 30 Exemplare in gazeverhängte Käfige mit den Massen 1 x l x l m verbracht und jeweils mit 1 ml der oben genannten Produkte besprüht. Ausgewertet wurde nach jeweils 1, 5, 1 0 und 20 Minuten auf
dem Boden liegende, flugunfähige Tiere und nach 24 Stunden die Mortalitäts-, bzw. Reanimationsrate (Wiedererholung).

**Ergebnisse in Prozent Mortalität:**

| Fliegen | | | | | | Motten | | | | |
|---|---|---|---|---|---|---|---|---|---|---|
| | 1 | 5 | 10 min. | 20 min. | 24 Std. | 1 | 5 | 10 | 20 | 24 Std. |
| IAM 88 | 100 | 100 | 100 | 100 | 100 | 100 | 100 | 100 | 100 | 100 |
| REF (I) | 20 | 80 | 100 | 100 | 95 | 100 | 100 | 100 | 100 | 100 |
| REF (II) | 10 | 70 | 100 | 100 | 100 | 90 | 100 | 100 | 100 | 100 |

Von den kriechenden Schädlingen wurden ebenfalls jeweils 30 Exemplare gemischter Metamorphosen in Wannen mit den Maßen 1 x I x 1 m verbracht und mit jeweils 1 ml besprüht - Bonitur wie vorher.

| | REF(I) | | | | |
|---|---|---|---|---|---|
| Schaben | 1 | 5 | 10 | 20min. | 24 Std. |
| | 60 | 90 | 100 | 100 | 100 |
| Ameisen | 1 | 5 | 10 | 20 min. | 24 Std. |
| | 10 | 35 | 70 | 100 | 100 |
| Zecken | 1 | 5 | 10 | 20 min. | 24 Std. |
| | 0 | 0 | 20 | 40 | 100 |

| IAM 88 | | | | | | REF (II) | | | | |
|---|---|---|---|---|---|---|---|---|---|---|
| Schaben | 1 | 5 | 10 min. | 20 min. | 24 Std. | 1 | 5 | 10 | 20min. | 24 Std. |
| | 100 | 100 | 100 | 100 | 100 | 65 | 95 | 100 | 100 | 100 |
| Ameisen | 1 | 5 | 10 | 20 min. | 24 Std. | 1 | 5 | 10 | 20 min. | 24 Std. |
| | 85 | 100 | 100 | 100 | 100 | 10 | 30 | 85 | 100 | 100 |
| Zecken | 1 | 5 | 10 | 20 min. | 24 Std. | 1 | 5 | 10 | 20 min. | 24 Std. |
| | 55 | 100 | 100 | 100 | 100 | 0 | 25 | 60 | 100 | 100 |

Die Auswertung nach der jeweils abgelaufenen Zeit erfasste ausschließlich auf dem Rücken liegende Tiere, die unter der Lupe keine Bein- oder Tentakelbewegungen zeigten. Auch diese Versuchsanordnungen zeigen, dass bei Anwendung des erfindungsgemäßen Insektenabwehrmittels überraschenderweise nicht nur eine vergleichbare, erwartete Wirkung, sondem eine den marktüblichen Vergleichsprodukten REF (1) und REF (II) sogar überlegene Wirkung erzielt werden konnte.

## Patentansprüche

1. Verwendung mindestens eines Acetals oder Halbacetals eines acyclischen Terpens (C₁₀), wobei die Acetal- bzw. Halbacetalreste jeweils selbst einen Terpenrest (C₁₀) darstellen, als Insektenabwehrmittel, **dadurch gekennzeichnet, dass** das Acetal oder Halbacetal ausgewählt ist aus der Gruppe bestehend aus:
cis-3,7-Dimethyl-2,6-octadienal-trans-3,7-Dimethyl-2,6-octadienyl-acetal (Nerageranylacetal, Struktur 5a), cis-3,7-Dimethyl-2,6-octadienal-di(trans-3,7-Dimethyl-2,6-octadienyl)-acetal (Neraldigeranylacetal, Struktur 5b), cis-3,7-Dimethyl-2,6-octadienal-R-(-)-3,7-Dimethyl-1,6-octadien-3-yl-acetal (Neral-(-)-Linalylacetal, Struktur 6a), cis-3,7-Dimethyl-2,6-octadienal-di(R-(-)-3,7-Dimethyl-1,6-octadien-3-yl)-acetal (Neraldi-(-)-Linalylacetal, Struktur 6b), cis-3,7-Dimethyl-2,6-octadienal-cis-3,7-Dimethyl-2,6-octadienyl-acetal Neralnerylacetal, Struktur 7a), cis-3,7-Dimethyl-2,6-octadienal-di(cis-3,7-Dimethyl-2,6-octadienyl)-acetal (Neraldinerylacetal, Struktur 7b), trans-3,7-Dimethyl-2,6-octadienal-trans-3,7-Dimethyl-2,6-octadienyl-acetal (Geranialgeranylacetal, Struktur 8a), trans-3,7-Dimethyl-2,6-octadienal-di(trans-3,7-Dimethyl-2,6-octadienyl)-acetal (Geranialdigeranylacetal, Struktur 8b), trans-3,7-Dimethyl-2,6-octadienal-R-(-)-3,7-Dimethyl-1,6-octadien-3-yl-acetal (Geranial-(-)-Linalylacetal, Struktur 9a), trans-3,7-Dimethyl-2,6-octadienal-di(R-(-)-3,7-Dimethyl-1,6-octadien-3-yl)-acetal (Geranialdi-(-)-Linalyl-acetal, Struktur 9b), trans-3,7-Dimethyl-2,6-octadienal-cis-3,7-Dimethyl-2,6-octadienylacetal (Geranialnerylacetal, Struktur 10a), trans-3,7-Dimethyl-2,6-octadienal-di(cis-3,7-Dimethyl-2,6-octadienyl)-acetal (Geranialdinerylacetal, Struktur 10b), ein R-(+)-3,7-Dimethyl-6-octenal-trans-3,7-Dimethyl-2,6-octadienylacetal ((+)-Citronellalgeranylacetal, Struktur 11a), R-(+)-3,7-Dimethyl-6-octenal-di(trans-3,7-Dimethyl-2,6-octadienyl)acetal ((+)-Citronellaldigeranylacetal, Struktur 11b), R-(+)-3,7-Dimethyl-6-octenal-R-(-)-3,7-Dimethyl-1,6-octadien-3-ylacetal ((+)-Citronella-(-)-linalylacetal, Struktur 12a), R-(+)-3,7-Dimethyl-6-octenal-di(R-(-)-3,7-Dimethyl-1,6-octadien-3-yl)acetal ((+)-Citronellaldi-(-)-linalyl-acetal, Struktur 12b), R-(+)-3,7-Dimethyl-6-octenal-cis-3,7-Dimethyl-2,6-octadienylacetal ((+)-Citronellalnerylacetal, Struktur 13a), R-(+)-3,7-Dimethyl-6-octenal-di(cis-3,7-Dimethyl-2,6-octadienyl)acetal ((+)-Citronellaldinerylacetal, Struktur 13b), S-(-)-3,7-Dimethyl-6-octenal-trans-3,7-Dimethyl-2,6-octadienylacetal ((-)-Citro-nellalgeranylacetal, Struktur 14a), S-(-)-3,7-Dimethyl-6-octenal-di(trans-3,7-Dimethyl-2,6-octadienyl)acetal ((-)-Citronellaldigeranylacetal, Struktur 14b), S-(-)-3,7-Dimethyl-6-octenal-R-(-)-3,7-Dimethyl-1,6-octadien-3-ylacetal ((-)-Citronellal-(-)-linalylacetal, Struktur 15a), S-(-)-3,7-Dimethyl-6-octenal-di(R-(-)-3,7-Dimethyl-1,6-octadien-3-yl)acetal ((-)-Citronellaldi-(-)-linalyl-acetal, Struktur 15b), S-(-)-3,7-Dimethyl-6-octenal-cis-3,7-Dimethyl-2,6-octadienylacetal ((-)-Citronellalnerylacetal, Struktur 16a), S-(-)-3,7-Dimethyl-6-octenal-di(cis-3,7-Dimethyl-2,6-octadienyl)acetal ((-)-Citronellaldinerylacetal, Struktur 16b), R-(+)-3,7-Dimethyl-6-octenal-R-(+)-3,7-Dimethyl-6-octenylacetal ((+)-Citronellal-(+)-Citrnellylacetal, Struktur 17a), R-(+)-3,7-Dimethyl-6-octenal-di(R-(+)-3,7-Dimethyl-6-octenyl)acetal ((+)-Citronellal-di(+)-Citronellylacetal, Struktur 17b), R-(+)-3,7-Dimethyl-6-octenal-S-(-)-3,7-Dimethyl-6-octenylacetal ((+)-Citronellal-(-)-Citronellylacetal, Struktur 18a), R-(+)-3,7-Dimethyl-6-octenal-di(S-(-)-3,7-Dimethyl-6-octenyl)acetal ((+)-Citronellal-di(-)-Citronellylacetal, Struktur 18b), S-(-)-3,7-Dimethyl-6-octenal-R-(+)-3,7-Dimethyl-6-octenylacetal ((-)-Citronellal-(+)-Citronellytacetal, Struktur 19a), S-(-)-3,7-Dimethyl-6-octenal-di(R-(+)-3,7-Dimethyl-6-octenyl)acetal ((-)-Citronellal-di(+)-Citronellylacetal, Struktur 19b), S-(-)-3,7-Dimethyl-6-octenal-S-(-)-3,7-Dimethyl-6-octenylacetal ((-)-Citronellal-(-)-Citronellylacetal, Struktur 20a), S-(-)-3,7-Dimethyl-6-octenal-di(S-(-)-3,7-Dimethyl-6-octenyl)acetal ((-)-Citronellal-di(-)-Citronellylacetal, Struktur 20b), cis-3,7-Dimethyl-2,6-octadienal-R-(+)-3,7-Dimethyl-6-octenylacetal (Neral-(+)-Citronellylacetal, Struktur 21a), cis-3,7-Dimethyl-2,6-octadienal-di(R-(+)-3,7-Dimethyl-6-octenyl)acetal (Neral-di(+)-Citronellylacetal, Struktur 21b), trans-3,7-Dimethyl-2,6-octadienal-R-(+)-3,7-Dimethyl-6-octenylacetal (Geranial-(+)-Citronellylacetal, Struktur 22a), trans-3,7-Dimethyl-2,6-octadienal-di(R-(+)-3,7-Dimethyl-6-octenyl)acetal (Geranial-di(+)-Citronellylacetal, Struktur 22b), cis-3,7-Dimethyl-2,6-octadienal-S-(-)-3,7-Dimethyl-6-octenylacetal (Neral-(-)-Citronellylacetal, Struktur 23a), cis-3,7-Dimethyl-2,6-octadienal-di(S-(-)-3,7-Dimethyl-6-octenyl)acetal (Neral-di(-)-Citronellylacetal, Struktur 23b), trans-3,7-Dimethyl-2,6-octadienal-S-(-)-3,7-Dimethyl-6-octenylacetal (Geranial-(-)-Citronellylacetal, Struktur 24a), trans-3,7-Dimethyl-2,6-octadienal-di(S-(-)-3,7-Dimethyl-6-octenyl)acetal (Geranial-di(-)-Citronellylacetal, Struktur 24b).

2. Verwendung nach Anspruch 1, enthaltend weiter eine gesättigte oder ungesättigte, aliphatische Carbonsäure C1 - C12, besonders bevorzugt Octansäure (Caprylsäure) und Decansäure (Caprinsäure).

3. Verwendung nach einem der vorgenannten Ansprüche, enthaltend weiter ein Benzoat, bevorzugt trans-3,7-Dimethyl-2,6-octadienylbenzoat (Geranylbenzoat, Struktur 45), cis-3,7-Dimethyl-2,6-octadienylbenzoat (Nerylbenzoat, Struktur 46), R-(-)-3,7-Dimethyl-1,6-octadien-3-ylbenzoat ((-)-Linalylbenzoat, Struktur 47), R-(+)-p-Menth-1-en-8-ylbenzoat ((+)-Terpinylbenzoat, 48), S-(-)-p-Menth-1-en-8-yl-benzoat ((-)-Terpinylbenzoat, 49), R-(+)-3,7-Dimethyl-6-octenylbenzoat ((+)-Citronellylbenzoat, 50), S-(-)-3,7-Dimethyl-6-octenylbenzoat ((-)-Citronellylbenzoat, 51) oder freie Benzoesäure oder ein Gemisch dieser Verbindungen.

4. Verwendung nach einem der vorgenannten Ansprüche, enthaltend weiter ein p-Mentha-3,8-diol, bevorzugt cis-p-Mentha-3,8-diol (cis-Isopulegolhydrat, Struktur 52) oder trans-p-Mentha-3,8-diol (trans-Isopulegolhydrat, Struktur 53) oder ein Gemisch derselben.

5. Verwendung nach einem der vorgenannten Ansprüche, enthaltend weiter ein Hydroxyoctanal, bevorzugt R-(+)-3,7-Dimethyl-7-Hydroxyoctanal ((+)-Citronellalhydrat, Struktur 54) oder ein S-(-)-3,7-Dimethyl-7-Hydroxyoctanal ((-)-Citronellalhydrat, Struktur 55) oder ein Gemisch derselben.

6. Verwendung nach einem der vorgenannten Ansprüche, enthaltend weiter (2^{≡},4aR^{≡},7R,8aR^{≡},-2-((R)-2,6-dimethylhept-5-enyl)-4,4,7-trimethylhexohydro-benzo[1,3]dioxin (trans-(+)-Citronellal-p-Mentha-3,8-diylacetal, Struktur56) oder (2^{≡},4aR^{≡},7R,8aS^{≡},-2-((R)-2,6-dimethylhept-5-enyl)-4,4,7-trimethylhexohydro-benzo[1,3]dioxin (cis-(+)-Citronellal-p-Mentha-3,8-diylacetal, Struktur 57) oder (2^{≡},4aR^{≡},7R,8aR^{≡},-2-((S)-2,6-dimethylhept-5-enyl)-4,4,7-trimethylhexohydro-benzo[1,3]dioxin (trans-(-)-Citronellal-p-Mentha-3,8-diylacetal, Struktur 58) oder (2^{≡},4aR^{≡},7R,8aS^{≡},-2-((S)-2,6-dimethylhept-5-enyl)-4,4,7-trimethylhexohydro-benzo[1,3]dioxin (cis-(-)-Citronellal-p-Mentha-3,8-diylacetal, Struktur 59) oder ein Gemisch derselben enthalten ist.

## Claims

1. Use of at least one acetal or semi-acetal of an acyclic terpene (C₁₀), wherein the acetal or semi-acetal radicals themselves represent a terpene radical, as an insect repellent, **characterized in that** the acetal or semi-acetal is selected from the group consisting of:
cis-3,7-dimethyl-2,6-octadienal-trans-3,7-dimethyl-2,6-octadienyl-acetal (nera-geranylacetal, Structure 5a), cis-3,7-dimethyl-2,6-octadienal-di(trans-3,7-dimethyl-2,6-octadienly)-acetal (neral digeranylacetal, Structure 5b), cis-3,7-dimethyl-2,6-octadienal-R-(-)-3,7-dimethyl-1,6-octadien-3-yl-acetal (neral-(-)-linalylacetal, Structure 6a), cis-3,7-dimethyl-2,6-octadienal-di(R-(-)-3,7-dimethyl-1,6-octadien-3-yl)-acetal (neral-di-(-)-linalylacetal, Structure 6b), cis-3,7-dimethyl-2,6-octadienal-cis-3,7-dimethyl-2,6-octadienyl-acetal neral nerylacetal, Structure 7a), cis-3,7-dimethyl-2,6-octadienal-di(cis-3,7-dimethyl-2,6-octadienyl)-acetal (neral dinerylacetal, Structure 7b), trans-3,7-dimethyl-2,6-octadienal-trans-3,7-dimethyl-2,6-octadienyl-acetal (geranial geranylacetal, Structure 8a), trans-3,7-dimethyl-2,6-octadienal-di(trans-3,7-dimethyl-2,6-octadienyl)-acetal (geranial digeranylacetal, Structure 8b), trans-3,7-dimethyl-2,6-octadienal-R-(-)-3,7-dimethyl-1,6-octadien-3-yl-acetal (geranial-(-)-linalylacetal, Structure 9a), trans-3,7-dimethyl-2,6-octadienal-di(R-(-)-3,7-dimethyl-1,6-octadien-3-yl)-acetal (geranial di-(-)-linalylacetal, Structure 9b), trans-3,7-dimethyl-2,6-octadienal-cis-3,7-dimethyl-2,6-octadienyl-acetal (geranial nerylacetal, Structure 10a), trans-3,7-dimethyl-2,6-octadienal-di(cis-3,7-dimethyl-2,6-octadienyl)-acetal (geranial dinerylacetal, Structure 10b), an R-(+)-3,7-dimethyl-6-octenal-trans-3,7-dimethyl-2,6-octadienyl-acetal ((+)-citronellal geranylacetal, Structure 11 a), R-(+)-3,7-dimethyl-6-octenal-di(trans-3,7-dimethyl-2,6-octadienyl)-acetal ((+)-citronellal digeranylacetal, Structure 11b), R-(+)-3,7-dimethyl-6-octenal-R-(-)-3,7-dimethyl-1,6-octadien-3-yl-acetal ((+)-citronella-(-)-linalylacetal, Structure 12a), R-(+)-3,7-dimethyl-6-octenal-di(R-(-)-3,7-dimethyl-1,6-octadien-3-yl)-acetal ((+)-citronellal di-(-)-linalylacetal, Structure 12b), R-(+)-3,7-dimethyl-6-octenal-cis-3,7-dimethyl-2,6-octadienylacetal ((+)-citronellal nerylacetal, Structure 13a), R-(+)-3,7-dimethyl-6-octenal-di(cis-3,7-dimethyl-2,6-octadienyl)acetal ((+)-citronellal dinerylacetal, Structure 13b), S-(-)-3,7-dimethyl-6-octenal-trans-3,7-dimethyl-2,6-octadienylacetal ((-)-citronellal geranylacetal, Structure 14a), S-(-)-3,7-dimethyl-6-octenal-di(trans-3,7-dimethyl-2,6-octadienyl)acetal ((-)-citronellal digeranylacetal, Structure 14b), S-(-)-3,7-dimethyl-6-octenal-R-(-)-3,7-dimethyl-1,6-octadien-3-yl-acetal ((-)-citronellal-(-)-linalylacetal, Structure 15a), S-(-)-3,7-dimethyl-6-octenal-di(R-(-)-3,7-dimethyl-1,6-octadien-3-yl)acetal ((-)-citronellal di-(-)-linalylacetal, Structure 15b), S-(-)-3,7-dimethyl-6-octenal-cis-3,7-dimethyl-2,6-octadienylacetal ((-)-citronellal nerylacetal, Structure 16a), S-(-)-3,7-dimethyl-6-octenal-di(cis-3,7-dimethyl-2,6-octadienyl)acetal ((-)-citronellal dinerylacetal, Structure 16b), R-(+)-3,7-dimethyl-6-octenal-R-(+)-3,7-dimethyl-6-octenylacetal ((+)-citronellal-(+)-citronellylacetal, Structure 17a), R-(+)-3,7-dimethyl-6-octenal-di(R-(+)-3,7-dimethyl-6-octenyl)acetal ((+)-citronellal-di(+)-citronellylacetal, Structure 17b), R-(+)-3,7-dimethyl-6-octenal-S-(-)-3,7-dimethyl-6-octenylacetal ((+)-citronellal-(-)-citronellylacetal, Structure 18a), R-(+)-3,7-dimethyl-6-octenal-di(S-(-)-3,7-dimethyl-6-octenyl)acetal ((+)-citronellal-di(-)-citronellylacetal, Structure 18b), S-(-)-3,7-dimethyl-6-octenal-R-(+)-3,7-dimethyl-6-octenylacetal ((-)-citronellal-(+)-citronellylacetal, Structure 19a), S-(-)-3,7-dimethyl-6-ocetanal-di(R-(+)-3,7-dimethyl-6-octenyl)-acetal ((-)-citronellal-di(+)-citronellylacetal, Structure 19b), S-(-)-3,7-dimethyl-6-octenal-S-(-)-3,7-dimethyl-6-octenylacetal ((-)-citronellal-(-)-citronellylacetal, Structure 20a,) S-(-)-3,7-dimethyl-6-octenal-di(S-(-)-3,7-dimethyl-6-octenyl)-acetal ((-)-citronellal-di(-)-citronellyl acetal, Structure 20b), cis-3,7-dimethyl-2,6-octadienal-R-(+)-3,7-dimethyl-6-octenyl-acetal (neral-(+)-citronellylacetal, Structure 21a), cis-3,7-dimethyl-2,6-octadienal-di(R-(+)-3,7-dimethyl-6-octenyl)-acetal (neral-di(+)-citronellyl acetal, Structure 21b), trans-3,7-dimethyl-2,6-octadienal-R-(+)-3,7-dimethyl-6-octenyl-acetal (geranial-(+)-citronellyl acetal, Structure 22a), trans-3,7-dimethyl-2,6-octadienal-di(R-(+)-3,7-dimethyl-6-octenyl)-acetal (geranial-di(+)-citronellyl acetal, Structure 22b), cis-3,7-dimethyl-2,6-octadienal-S-(-)-3,7-dimethyl-6-octenyl-acetal (neral-(-)-citronellyl acetal, Structure 23a), cis-3,7-dimethyl-2,6-octadienal-di(S-(-)-3,7-dimethyl-6-octenyl)-acetal (neral-di(-)-citronellyl acetal, Structure 23b), trans-3,7-dimethyl-2,6-octadienal-S-(-)-3,7-dimethyl-6-octenyl-acetal (geranial-(-)-citronellyl acetal, Structure 24a), trans-3,7-dimethyl-2,6-octadienal-di(S-(-)-3,7-dimethyl-6-octenyl)-acetal (geranial-di(-)-citronellyl acetal, Structure 24b).

2. Use according to claim 2, further containing a saturated or unsaturated, aliphatic carboxylic acid C1 - C12, especially preferably octanoic acid (caprylic acid) and decanoic acid (capric acid).

3. Use according to any one of the preceding claims, further containing a benzoate, preferably trans-3,7-dimethyl-2,6-octadienyl benzoate (geranyl benzoate), Structure 45), cis-3,7-dimethyl-2,6-octadienyl benzoate (neryl benzoate, Structure 46), R-(-)-3,7-dimethyl-1,6-octadien-3-yl benzoate ((-)-linalyl benzoate, Structure 47), R-(+)-p-menth-1-en-8-yl benzoate ((+)-terpinyl benzoate, 48, S-(-)-p-menth-1-en-8-yl benzoate ((-)-terpinyl benzoate, 49), R-(+)-3,7-dimethyl-6-octenyl benzoate ((+)-citronellyl benzoate, 50), S-(-)-3,7-dimethyl-6-octenyl benzoate ((-)-citronellyl benzoate, 51) or free benzoic acid or a mixture of said compounds.

4. Use according to any one of the preceding claims, further containing a p-mentha-3,8-diol, preferably cis-p-mentha-3,8-diol (cis-isopulegol hydrate, Structure 52) or trans-p-mentha-3,8-diol (trans-isopulegol hydrate, Structure 53) or a mixture thereof.

5. Use according to any one of the preceding claims, further containing a hydroxy octanal, preferably R-(+)-3,7-dimethyl-7-hydroxy octanal ((+)-citronellal hydrate, Structure 54) or an S-(-)-3,7-dimethyl-7-hydroxy octanal ((-)-citronellal hydrate, Structure 55) or a mixture thereof.

6. Use according to any one of the preceding claims, further containing (2^{≡}, 4aR^{≡},7R,8aR^{≡},-2-((R)-2,6-dimethylhept-5-enyl)-4,4,7-trimethylhexohydrobenzo[1,3]dioxin (trans-(+)-citronellal-p-mentha-3,8-diylacetal, Structure 56) or (2^{≡}, 4aR^{≡},7R,8aS^{≡}, -2-((R)-2,6-dimethylhept-5-enyl)-4,4,7-trimethylhexohydrobenzo[1,3]dioxin (cis-(+)-citronellal-p-mentha-3,8-diylacetal, Structure 57) or (2^{≡},4aR^{≡},7R,8aR^{≡},-2-((S)-2,6-dimethylhept-5-enyl)-4,4,7-trimethylhexohydrobenzo[1,3]dioxin (trans-(-)-citronellal-p-mentha-3,8-diylacetal, Structure 58) or (2^{≡},4aR^{≡},7R,8aS^{≡}),-2-((S)-2,6-dimethylhept-5-enyl)-4,4,7-trimethylhexohydrobenzo[1,3]dioxin (cis-(-)-citronellal-p-mentha-3,8-diylacetal, Structure 59) or containing a mixture thereof.

## Revendications

1. Utilisation d'au moins un acétal ou hémiacétal d'un terpène acyclique (C₁₀), où les radicaux acétal ou hémiacétal représentent respectivement un radical terpène (C₁₀), à titre de répulsif contre les insectes, **caractérisé en ce que** l'acétal ou l'hémiacétal est choisi dans le groupe constitué par :
cis-3,7-diméthyl-2,6-octadiénal-trans-3,7-diméthyl-2,6-octadiényl-acétal (néral-géranylacétal, structure 5a), cis-3,7-diméthyl-2,6-octadiénal-di(trans-3,7-diméthyl-2,6-octadiényl)-acétal (néral-digéranylacétal, structure 5b), cis-3,7-diméthyl-2,6-octadiénal-R-(-)-3,7-diméthyl-1,6-octadién-3-yl-acétal (néral-(-)-linalylacétal, structure 6a), cis-3,7-diméthyl-2,6-octadiénal-di(R-(-)-3,7-diméthyl-1,6-octadién-3-yl)-acétal (néraldi-(-)-linalylacétal, structure 6b), cis-3,7-diméthyl-2,6-octadiénal-cis-3,7-diméthyl-2,6-octadiényl-acétal (néraldinérylacétal, structure 7a), cis-3,7-diméthyl-2,6-octadiénal-di(cis-3,7-diméthyl-2,6-octadiényl)-acétal (néraldinérylacétal, structure 7b), trans-3,7-diméthyl-2,6-octadiénal-trans-3,7-diméthyl-2,6-octadiényl-acétal (géranialgéranyl-acétal, structure 8a), trans-3,7-diméthyl-2,6-octadiénal-di(trans-3,7-diméthyl-2,6-octadiényl)-acétal (géranialdigéranyl-acétal, structure 8b), trans-3,7-diméthyl-2,6-octadiénal-R-(-)-3,7-diméthyl-1,6-octadién-3-yl-acétal (géranial-(-)-linalylacétal, structure 9a), trans-3,7-diméthyl-2,6-octadiénal-di(R-(-)-3,7-diméthyl-1,6-octadién-3-yl)-acétal (géranialdi-(-)-linalylacétal, structure 9b), trans-3,7-diméthyl-2,6-octadiénal-cis-3,7-diméthyl-2,6-octadiényl-acétal (géranialnéryl-acétal, structure 10a), trans-3,7-diméthyl-2,6-octadiénal-di(cis-3,7-diméthyl-2,6-octadiényl)-acétal (géranialdinéryl-acétal, structure 10b), un R-(+)-3,7-diméthyl-6-octénal-trans-3,7-diméthyl-2,6-octadiénylacétal ((+)-citronellalgéranyl-acétal, structure 11a), R-(+)-3,7-diméthyl-6-octénal-di(trans-3,7-diméthyl-2,6-octadiényl)acétal ((+)-citronellaldigéranyl-acétal, structure 11b), R-(+)-3,7-diméthyl-6-octénal-R-(-)-3,7-diméthyl-1,6-octadién-3-ylacétal ((+)-citronellal-(-)-linalylacétal, structure 12a), R-(+)-3,7-diméthyl-6-octénal-di(R-(-)-3,7-diméthyl-1,6-octadién-3-yl)acétal ((+)-citronellaldi-(-)-linalylacétal, structure 12b), R-(+)-3,7-diméthyl-6-octénal-cis-3,7-diméthyl-2,6-octadiénylacétal ((+)-citronellalnéryl-acétal, structure 13a), R-(+)-3,7-diméthyl-6-octénal-di(cis-3,7-diméthyl-2,6-octadiényl)acétal ((+)-citronellaldinéryl-acétal, structure 13b), S-(-)-3,7-diméthyl-6-octénal-trans-3,7-diméthyl-2,6-octadiénylacétal ((-)-citronellalgéranyl-acétal, structure 14a), S-(-)-3,7-diméthyl-6-octénal-di(trans-3,7-diméthyl-2,6-octadiényl)acétal ((-)-citronellaldigéranyl-acétal, structure 14b), S-(-)-3,7-diméthyl-6-octénal-R-(-)-3,7-diméthyl-1,6-octadién-3-ylacétal ((-)-citronellal-(-)-linalylacétal, structure 15a), S-(-)-3,7-diméthyl-6-octénal-di(R-(-)-3,7-diméthyl-1,6-octadién-3-yl)acétal ((-)-citronellaldi-(-)-linalylacétal, structure 15b), S-(-)-3,7-diméthyl-6-octénal-cis-3,7-diméthyl-2,6-octadiénylacétal ((-)-citronellalnéryl-acétal, structure 16a), S-(-)-3,7-diméthyl-6-octénal-di(cis-3,7-diméthyl-2,6-octadiényl)acétal ((-)-citronellaldinéryl-acétal, structure 16b), R-(+)-3,7-diméthyl-6-octénal-R-(+)-3,7-diméthyl-6-octénylacétal ((+)-citronellal-(+)-citronellylacétal, structure 17a), R-(+)-3,7-diméthyl-6-octénal-di(R-(+)-3,7-diméthyl-6-octényl)acétal ((+)-citronellaldi-(+)-citronellylacétal, structure 17b), R-(+)-3,7-diméthyl-6-octénal-S-(-)-3,7-diméthyl-6-octénylacétal ((+)-citronellal-(-)-citronellylacétal, structure 18a), R-(+)-3,7-diméthyl-6-octénal-di(S-(-)-3,7-diméthyl-6-octényl)acétal ((+)-citronellaldi-(-)-citronellylacétal, structure 18b), S-(-)-3,7-diméthyl-6-octénal-R-(+)-3,7-diméthyl-6-octénylacétal ((-)-citronellal-(+)-citronellylacétal, structure 19a), S-(-)-3,7-diméthyl-6-octénal-di(R-(+)-3,7-diméthyl-6-octényl)acétal ((-)-citronellaldi-(+)-citronellyl-acétal, structure 19b), S-(-)-3,7-diméthyl-6-octénal-S-(-)-3,7-diméthyl-6-octénylacétal ((-)-citronellal-(-)-citronellylacétal, structure 20a), S-(-)-3,7-diméthyl-6-octénal-di(S-(-)-3,7-diméthyl-6-octényl)acétal ((-)-citronellaldi-(-)-citronellylacétal, structure 20b), cis-3,7-diméthyl-2,6-octadiénal-R-(+)-3,7-diméthyl-6-octénylacétal (néral-(+)-citronellylacétal, structure 21a), cis-3,7-diméthyl-2,6-octadiénal-di(R-(+)-3,7-diméthyl-6-octényl)acétal (néral-di-(+)-citronellyl-acétal, structure 21b), trans-3,7-diméthyl-2,6-octadiénal-R-(+)-3,7-diméthyl-6-octénylacétal (géranial-(+)-citronellylacétal, structure 22a), trans-3,7-diméthyl-2,6-octadiénal-di(R-(+)-3,7-diméthyl-6-octényl)acétal (géranial-di-(+)-citronellylacétal, structure 22b), cis-3,7-diméthyl-2,6-octadiénal-S-(-)-3,7-diméthyl-6-octénylacétal (néral-(-)-citronellyl-acétal, structure 23a), cis-3,7-diméthyl-2,6-octadiénal-di(S-(-)-3,7-diméthyl-6-octényl)acétal (néral-di-(-)-citronellylacétal, structure 23b), trans-3,7-diméthyl-2,6-octadiénal-S-(-)-3,7-diméthyl-6-octénylacétal (géranial-(-)-citronellylacétal, structure 24a), trans-3,7-diméthyl-2,6-octadiénal-di(S-(-)-3,7-diméthyl-6-octényl)acétal (géranial-di-(-)-citronellylacétal, structure 24b).

2. Utilisation selon la revendication 1, comprenant en outre un acide carboxylique aliphatique en C₁ à C₁₂ saturé ou insaturé, de manière particulièrement préférée un acide octanoïque (acide caprylique) et un acide décanoïque (acide caprique).

3. Utilisation selon l'une des revendications précédentes, comprenant en outre un benzoate, de préférence un benzoate de trans-3,7-diméthyl-2,6-octadiényle (benzoate de géranyle, structure 45), un benzoate de cis-3,7-diméthyl-2,6-octadiényle (benzoate de néryle, structure 46), un benzoate de R-(-)-3,7-diméthyl-1,6-octadién-3-yle (benzoate de (-)-linalyle, structure 47), un benzoate de R-(+)-p-menth-1-èn-8-yle (benzoate de (+)-terpinyle, 48), un benzoate de S-(-)-p-menth-1-èn-8-yle (benzoate de (-)-terpinyle, 49), un benzoate de R-(+)-3,7-diméthyl-6-octényle (benzoate de (+)-citronellyle, 50), un benzoate de S-(-)-3,7-diméthyl-6-octényle (benzoate de (-)-citronellyle, 51) ou un acide benzoïque libre ou un mélange de ces composés.

4. Utilisation selon l'une des revendications précédentes, comprenant en outre un p-mentha-3,8-diol, de préférence un cis-p-mentha-3,8-diol (hydrate de cis-isopulégol, structure 52) ou un trans-p-mentha-3,8-diol (hydrate de trans-isopulégol, structure 53) ou un mélange de ceux-ci.

5. Utilisation selon l'une des revendications précédentes, comprenant en outre un hydroxyoctanal, de préférence un R-(+)-3,7-diméthyl-7-hydroxyoctanal (hydrate de (+)-citronellal, structure 54) ou un S-(-)-3,7-diméthyl-7-hydroxyoctanal (hydrate de (-)-citronellal, structure 55) ou un mélange de ceux-ci.

6. Utilisation selon l'une des revendications précédentes, comprenant en outre :
la (2^{E}, 4aR^{E}, 7R, 8aR^{E}, -2- ((R)-2,6-diméthylhept-5-ényl-4,4,7-triméthylhexahydro-benzo[1,3]dioxine (trans-(+)-citronellal-p-mentha-3,8-diylacétal, structure 56) ou la (2^{E}, 4aR^{E}, 7R, 8aS^{E}, -2- ((R)-2,6-diméthylhept-5-ényl)-4,4,7-triméthylhexahydro-benzo[1,3]dioxine (cis-(+)-citronellal-p-mentha-3,8-diylacétal, structure 57) ou la (2^{E},4aR^{E},7R, 8aRr^{E}, -2-((S) -2,6-diméthylhept-5-ényl)-4,4,7-triméthylhexahydro-benzo[1,3]dioxine (trans-(-)-citronellal-p-mentha-3,8-diylacétal, structure 58) ou la (2^{E}, 4aR^{E}, 7R, 8aS^{E}, -2- ((S)-2,6-diméthylhept-5-ényl)-4,4,7-triméthylhexahydro-benzo[1,3]dioxine (cis-(-)-citronellal-p-mentha-3,8-diylacétal, structure 59) ou un mélange de celles-ci.
